# EUROPEAN PATENT APPLICATION

(11) **EP 4 306 906 A1**
(43) Date of publication of application: **17.01.2024**
(21) Application number: 22184381.6
(22) Date of filing: 12.07.2022
(51) Int. Cl.: G01C 21/00, G06F 16/901, G06K 9/62

(54) **METHODS AND SYSTEMS USING DIGITAL MAP DATA**

(71) Applicant: TomTom Global Content B.V., 1011 AC Amsterdam (NL)
(72) Inventor: Rosikiewicz, Michal, c/o 1011AC Amsterdam (NL); Cuprjak, Marcin, c/o 1011AC Amsterdam (NL); Schuerman, Kees, c/o 1011AC Amsterdam (NL)
(74) Representative: Dehns

(57) **Abstract**

A method of providing a map linkage data product for use in determining a correspondence between first and second digital maps is disclosed. Each of the first and second digital maps each comprise a plurality of arcs connected by nodes representing the road network in a geographic area. The method comprises determining an abstraction of each of the first digital map and the second digital map. The abstraction of each digital map comprises a plurality of stretches connected by nodes, wherein the nodes of each abstracted digital map are a subset of the nodes of the original digital map from which it is derived, corresponding to the topological nodes thereof. The abstraction of each of the first digital map and the second digital map is used to obtain a map linkage data product which provides a correspondence between the first and second digital maps.

## Description

### Field of the Invention

The present invention relates generally to methods and systems for providing a map linkage data e.g. a map linkage data product for providing a correspondence between different digital maps. The invention also relates to the use of such map linkage data, in particular to facilitate communication between digital map based applications using different digital maps. The digital maps may be different types of digital map, for example which provide models of a navigable network e.g. road network supporting different types of functionality. For example, the digital maps may be maps supporting navigation and autonomous driving functionality.

The invention is particularly, although not exclusively, applicable to the conversion (in either direction) between different digital maps which do and do not comprise lane level geometry data. Examples of such maps are so-called High Definition (HD) maps, which do include lane level geometry data, and Standard Definition (SD) maps which do not. The invention may, in embodiments, at least facilitate the communication between digital map based applications e.g. digital map clients using different digital map types. Exemplary embodiments relate to HD and SD digital map based applications. Such map based applications may operate on digital map data received from a map server, and may execute on-board a vehicle. Thus, the map linkage data of the present invention may, at least in embodiments, be applied to providing a correspondence between locations according to different digital maps to facilitate communication between vehicle-based digital map based applications.

### Background

Digital map based applications operate on digital map data and may be used to support various types of functionality in relation to a vehicle. The functionality may range from navigation functionality, such as supporting a driver to reach a desired destination, and more advanced functionality, such as motion planning, which may involve providing some level of autonomous functionality. The digital maps upon which such digital map based applications operate may be considered to be models of the geospatial reality, and comprise abstractions of features in the real world.

Two types of digital maps that may be used are maps which do not include lane geometry information (and which may be referred to as "Standard Definition" (SD) maps herein), and maps which do include lane geometry data (and which may be referred to as "High Definition" (HD) maps herein).

A digital map which does not include lane geometry information generally describes a road network at a level of detail sufficient to support a more limited set of common navigation functions, including, for example:
finding a desired destination (an address or a Point of Interest);
finding a suitable route to the destination from a start location or current location;
providing navigation guidance to a human driver.

The map will typically contain parameters to determine a time of travel, and parameters to provide guidance to a user of a navigation application using the map data (turn information, lane instructions for complex junctions, and so on).

In contrast, other types of digital maps include lane level geometry data and generally describe a road network at a greater level of detail so as to support more advanced functionality, including motion planning for a vehicle. The map may include information for use not just in localization of a vehicle (finding a position on the map) but also controlling a vehicle motion both laterally and longitudinally.

Digital map data for vehicle based applications e.g. AD/ADAS or navigation applications is typically generated remotely, e.g. in a cloud server environment, by compiling suitable source data from one or more map data source(s), and then the map data is delivered from the cloud (i.e. from one or more map servers) to vehicles requiring the map data. An in-vehicle distribution network then distributes the map data as required to the any map-based applications executing on-board the vehicle which require the data e.g. AD/ADAS applications or navigation applications. Typically map client(s) executing on the vehicle distribute map data to any map based applications.

HD and SD map data may be used by various map based applications. A map-based application as used herein refers to a software application implementing functionality supported by the applicable type of map data. A map-based application is executed by a set of one or more processors. Such applications may be executed by devices associated with a vehicle, e.g. dedicated navigation devices or any mobile device on which a suitable map based application is executed (e.g. a mobile phone, tablet or wearable device, such as a watch), or an integrated in-vehicle system. For example, a map-based application, in particular an HD map based application, may be executed on an electronic control unit (ECU) of a vehicle travelling within a navigable (e.g. road) network covered by the digital map. HD and SD map data may be provided to such map based applications by HD and SD map clients respectively. Such map clients are typically associated with the vehicle system, and may receive their respective forms of digital map data from HD or SD map servers for provision to the applicable map based applications using those forms of digital map data. The map clients may themselves perform some processing e.g. localisation using their respective types of HD or SD map data e.g. to provide output data for provision to various map based applications.

Although digital maps of these different types, including and not including lane level geometry data, share a common representation technology using arcs and nodes, they differ in a number of respects for example in some or all of; their data model, accuracy, feature coverage, and often also in geographical coverage. Another way in which such maps may differ from one another is in relation to the manner in which the map data is captured. Such differences may cause difficulties in performing correlation between data objects in the respective maps.

While the invention is described in particular in relation to providing a correspondence between digital maps which do and do not include lane level geometry data, more generally the invention may be applicable to determining a correspondence between any, different, first and second digital maps.

Differences in digital maps of road networks have been considered previously e.g. in the provisioning of traffic information and for providing map independent location information for points of interest. Various map agnostic referencing systems, such as OpenLR or Agora-C, exist, that provide a way to describe locations, road segments or routes of a road network in a digital map in a map independent or agnostic way. Such referencing systems enable a location with respect to one digital map to be determined with respect to another, different digital map.

However, it has been found that such systems may not provide a full correspondence when applied to the problem of attempting to correlate between different digital maps, in particular where they differ in type, such as in relation to the provision of lane geometry data. For example, the use of such map agnostic location referencing systems may rely upon map matching, which may not be supported by HD type maps.

The Applicant has therefore realised that there remains a need for improved methods of determining a correspondence between digital maps, for example which may be used by different digital map based applications.

### Summary of the Invention

In accordance with a first aspect of the present invention there is provided;
a method of providing a map linkage data product for use in determining a correspondence between first and second digital maps;
wherein the first and second digital maps each comprise a plurality of arcs connected by nodes representing the road network in a geographic area;
the method comprising;
   determining an abstraction of each of the first digital map and the second digital map, wherein the abstraction of each digital map comprises a plurality of stretches connected by nodes, wherein the nodes of each abstracted digital map are a subset of the nodes of the original digital map from which it is derived, corresponding to the topological nodes thereof;
   and using the abstraction of each of the first digital map and the second digital map to obtain a map linkage data product, wherein the map linkage data product provides a correspondence between the first and second digital maps.

The present invention thus provides a map linkage data product which enables a correspondence between first and second digital maps to be determined. The digital maps are each representative of a road network in the same geographic region. However the maps are independent maps that differ from one another. The maps may be from different providers and/or customised for e.g. optimised for different uses.

One of the first and second digital maps may be customised to uses which rely upon lane geometry data, while the other one of the first and second digital maps may be customised to uses which require road geometry data but do not need lane geometry data. The first and second digital maps may represent different features of the road network relevant to the different uses. For example, the first and second digital maps may represent the road network to differing levels of detail. Differences between the first and second digital maps may arise, at least in part, from differences in terms of any one or ones of; the data model used for the map, capturing rules, accuracy, feature coverage and geographic coverage.

In some embodiments one of the first and second digital maps is not indicative of a lane geometry of the road network, and the other one of the first and second digital maps is indicative of a lane geometry of the road network. Thus, one of the first and second digital maps comprises data indicative of a lane geometry of the road network, and the other one of the first and second digital maps does not. Both maps then comprise road geometry data. However, it will be appreciated that the map linkage data of the present invention is also applicable to determining a correspondence between first and second digital maps which do not necessarily differ in type e.g. in relation to whether or not they comprise lane geometry data. As discussed below, the present invention may, for example, be used to find a correspondence, in either direction, between two different i.e. independent SD maps, between two different i.e. independent HD maps, or between an SD and an HD map.
It is desirable to be able to determine a correspondence between first and second digital maps that are different, independent maps. By "determining a correspondence" between the maps it is meant that for location data with respect to one of the maps, corresponding location data in the other one of the maps may be determined. The location data is map matched location data i.e. the correspondence map data enables map matched location data with respect to one of the first and second digital maps to be used to determine corresponding map matched location data with respect to the other of the first and second digital maps. A map matched location refers to a location defined with respect to the applicable digital map e.g. on a road element or elements of the road network represented by the map. This is in contrast to a GPS location or geographic coordinate system location or similar. Both the map matched location data with respect to the starting one of the first and second digital maps, and the corresponding map matched location data with respect to the other one of the first and second digital maps represent the same part of the real word road network represented by each of the digital maps.

The ability to determine a correspondence between first and second digital maps may be useful for a number of reasons. For example, this may support communication between map based applications using the respective maps (or maps of the same types), and/or may support functionality requiring the use of both types of map data. In exemplary embodiments described below, a corresponding route to a route generated with respect to the first digital map may be determined with respect to the second digital map to support motion planning for a vehicle e.g. to facilitate obtaining vehicle horizon data.

The first and second digital maps may be any such maps for which it is useful to determine a correspondence. In some embodiments the first and second digital maps are digital maps used by different map based applications. The map based applications may be executed by map clients. At least one of the map based applications may be associated with a vehicle. The map linkage data product is specific to particular first and second digital maps. However, as discussed below, it may be used as part of a process in determining a correspondence between other digital maps of the same type as the first or second digital map. For example, a first digital map based application may use a digital map of the same type, but different to the first digital map. The map linkage data may still be used to determine a correspondence between locations with respect to the map used by the first digital map based application and with respect to the second digital map by adding some additional initial processing to convert a location with respect to the map used by the first digital map based application to a location with respect to the first digital map. Such a conversion may be performed using any suitable technique, since it is of the same type as the first digital map.

Before describing the map linkage data and its generation in more detail, some features of the first and second digital maps will be described.

The first and second digital maps are each representative of a road network in the same geographic area. The first and second digital maps are independent maps representing the road network in a given geographic area.

As mentioned above, in embodiments at least one of the first and second digital maps (and optionally only one of the maps) does not comprise data indicative of a lane geometry of the road network. The map then does not comprise data indicative of a lane trajectory e.g. lane centreline of individual lanes associated with road elements represented by the arcs of the map. The following features refer to the or each one of the first and second digital maps which does not include lane geometry data. The arcs of the digital map are not associated with such lane trajectory data. Instead, if some indication of lane geometry is required, road geometry information of the digital map may be used as an approximation for lane geometry data. For example, a road trajectory e.g. road centreline of an arc may be taken to correspond to the trajectory of each lane associated with a road element represented by the arc.

Lane geometry information herein refers to information relating to the geometry of individual lanes of a group of one or more lanes associated with a road element of the road network. This may be referred to as lane level geometry information. Lane geometry describes the geometry e.g. trajectory of a specific individual lane. It is not merely an approximation of the lane geometry of an individual lane provided by a road centreline. Thus the lane geometry information may differ from road geometry information relating to the road element. The lane geometry information will differ between multiple lanes where present i.e. each would have its own trajectory e.g. centreline.

While in embodiments the one of the first and second digital maps does not include lane geometry data, the digital map may comprise other lane information. Lane information refers to information indicative of a lane structure of the road network. For example, for at least some of the arcs, the digital map may comprise data indicative of; a number of lanes associated with the road element represented by the arc, lane types, and/or lane dependent attributes such as speed restrictions. The digital map may be indicative of a connectivity between lanes. As described below, the digital map may comprise lane nodes indicative of points at which a number of lanes associated with road elements of the road network changes. Thus, the digital map may include data indicative of a basic lane model for at least some of the road elements of the road network.

In embodiments at least some of the arcs of the digital map (which does not comprise lane geometry data) are indicative of a number of lanes associated with a road element of the road network represented by the arc.

The arcs of the digital map represent road elements of the road network.

The arcs (e.g. each arc) of the digital map are indicative of a road geometry of the road network. The arcs (e.g. each arc) may be indicative of the trajectory of the road element represented by the arc e.g. a road centreline. A road centreline may be represented by an appropriate line geometry.

In embodiments the arcs of the digital map are indicative of a trajectory of road elements represented by the arcs and are not indicative of a trajectory of individual lanes associated with the road elements.

The arcs of the digital map may be associated with attribute data. The attribute data is indicative of attributes of the road elements represented by the arcs. Examples of attribute data include length, Functional Road Class (FRC), Form of Way (FOW) etc.

The nodes of the digital map (which does not include lane geometry data) represent nodes of the road network. Each node may be associated with location data indicative of the position of a respective node of the road network. The location data may comprise longitude and latitude data. The location data may further comprise an indication of the z-directional level of the node. Thus, rather than being associated with true 3-directional position information for the node i.e. absolute positional information, the node may be associated with such positional information in respect of two dimensions i.e. the longitude and latitude of the node, and optionally an indication of a relative position of the node in the z-direction e.g. with respect to other elements of the map e.g. arcs and/or nodes.

In embodiments, the map may provide a 2-dimensional model of the road network.

The digital map may, for example, support navigation functionality such as route generation through the road network. In some embodiments, the digital map may also support some degree i.e. lower levels of driving automation functionality e.g. L1-L2 of the SAE (J3016) Automation level definitions (i.e. driver assistance or partial automation levels), where a human driving system monitors the driving environment but not higher levels of driving automation.

In some embodiments the other one of the digital maps does include lane geometry information. Thus, at least some of the arcs of the digital map are indicative of a lane geometry of the road network. Optionally each of the arcs is associated with lane geometry information. In other embodiments, both of the first and second digital maps may include lane geometry information. The following applies to the or each one of the first and second digital maps which does include lane geometry information.

The arcs of the digital map which are indicative of a lane geometry of the road network may be associated with data indicative of a trajectory of each lane of a group or one or more lanes associated with the road area represented by the arc e.g. a lane centreline. A lane centreline may be represented by an appropriate line geometry.

The arcs of the digital map may be associated with other lane information. For example, the digital map may comprise data indicative of a number of lanes associated with a road area, lane types, lane dependent attributes such as lane length, lane width, speed restrictions and/or a connectivity between lanes. Thus, the digital map may include data indicative of a basic lane model for at least some of the road elements of the road network.

The arcs of the digital map may represent road areas of the road network. Each road area comprises a group of one or more lanes. In embodiments the arcs comprise road arcs (representing non-junction road areas of the road network) and junction arcs representing junction areas of the road network. However, the invention is not limited to a digital map of this type. Lane geometry information e.g. lane trajectory such as centreline information associated with the arcs of the digital map is indicative of the geometry of individual lanes of the lane group associated with the road area. In the case of a junction area, the lanes are in the form of paths which may be taken through the junction area represented by a junction arc. Thus lane geometry information associated with arcs of the digital map may describe a predefined e.g. marked lane structure associated with a road area of the road network, or may describe trajectories which may be taken through a road area, in particular a junction area, which may not necessarily be associated with a predefined e.g. marked lane structure, at least over a portion of the area of the road e.g. junction area. Paths taken through a junction, and hence the lane geometry thereof, may be inferred from historic travel data, being an aggregate of paths taken by vehicles.

The arcs of the digital map which are indicative of a lane geometry of the road network may be associated with data indicative of a lane geometry e.g. trajectory, such as centreline data, for each one of the group of one or more lanes of a road area represented by the arc. Thus, in embodiments, each such arc is associated with data indicative of a set of lane trajectory lines representing the trajectory of each one of the group of one or more lanes of the road area represented by the arc. In the case of junction arcs, the lane trajectory lines may be referred to as junction lane trajectory lines.

While lanes associated with non-junction road areas of the map may split or merge, lanes associated with junction areas do not split or merge. Junction lanes may be associated with a length attribute.

The term "lane" as used herein refers to any geospatially constrained traffic flow associated with an area of the road network, which may or may not be a predefined e.g. marked lane.

In any of the embodiments of the invention in which one (or both) of the first and second digital maps comprise lane geometry data, at least some of the arcs of one of the digital map may be indicative of a road geometry of a road area of the road network represented by the arc e.g. a trajectory of a road area of the road network represented by the arc e.g. a road centreline.

The road geometry of the road area refers to the road geometry of the overall road area i.e. the group of one or more lanes, rather than that of specific lanes. A road centreline may be represented by an appropriate line geometry. Where the digital map comprises road arcs and junction arcs, at least some of the road arcs may indicative of such road trajectory data. The road arcs may be representative of road elements of the road network, and the trajectory data may then be indicative of the trajectory of the road element. A junction arc will not be associated with road trajectory data.

In embodiments at least some of the arcs of the digital map which are indicative of a lane geometry of a group of one or more lanes of a road area of the road network represented by the arc are also indicative of a road geometry e.g. trajectory, such as a centreline of the road area.

The arcs of the digital map may be associated with attribute data. The attribute data is indicative of attributes of the road elements represented by the arcs. Examples of attribute data include length, Functional Road Class (FRC), Form of Way (FOW) etc. The arcs may, in embodiments, be associated with data indicative of a type of the arc e.g. whether the arc is a road arc or junction arc, where the digital map comprises such types of arc.

The nodes of the digital map represent nodes of the road network. Each node may be associated with location data indicative of the position of a respective node of the road network. The location data may comprise longitude, latitude and elevation data. Thus, the nodes may be associated with true 3-directional position information for the node i.e. absolute positional information. This may be in contrast to a digital map which does not include lane geometry information. The provision of three-dimensional position information for nodes may support functionality such as higher levels of autonomous driving.

The digital map may, for example, support functionality such as automated driving. In some embodiments, the second digital map may support higher levels of driving automation e.g. L3-L5 of the SAE (J3016) Automation level definitions (i.e. conditional, high or full automation), where an automated driving system monitors the driving environment. The digital map may also support lower levels of automation e.g. L2 described above.

The first and second digital maps both provide a representation of the road network. The first and second digital maps may represent static features of the road network. Thus, in embodiments at least, the first and second digital maps may not be representative of dynamic features of the road network. The maps may, if desired, be supplemented with live data indicative of dynamic features e.g. traffic, weather conditions, accident locations etc.

In general herein, any reference to lane or road geometry may refer to a lane or road trajectory, such as a lane or road centreline.

The arcs of the first and second digital maps may be associated with attributes indicative of a direction of traffic flow, or may have a direction indicative of the direction of traffic flow. Preferably the arcs of both the first and second digital maps have a direction indicative of traffic flow. In these embodiments the first and second digital maps may be referred to as "directed graphs". The abstractions of the first and second digital maps may correspondingly also be "directed graphs".

In general, each of the first and second digital maps is represented by a directed graph comprising nodes representing junctions connected by arcs (representing road elements). The nodes and arcs have associated attributes that describe real world properties of the node or arc.

The Applicant has recognised that determining a correspondence between first and second independent digital maps is not straightforward. For example, a direct correspondence between the arcs of the two maps may not always exist. This may arise for various reasons. For example, where one of the maps includes lane level geometry data and the other does not, lane level geometry data may not exist for all portions of the road network. Thus, where, for example, only one of the digital maps comprises lane geometry data, there may be some areas of the road network represented by the other digital map which are not covered by the digital map. Alternatively or additionally, whatever the type of the first and second digital maps, the structure of the first digital map i.e. the nodes and arcs thereof may not directly correspond to nodes and arcs of the second digital map. For example, a different structure of nodes and arcs may be necessary to describe lane geometry where provided in one of the digital maps. In general, it has been found that a portion of the road network represented by a single arc of the first digital map may be longitudinally and/or laterally represented by more than one arc of the second digital map and vice versa. Portions of the road network represented by one of the first and second digital maps may not necessarily be covered by the other one of the first and second digital maps.

In accordance with the invention, abstractions of both the first and second digital maps are determined. The abstraction includes only those nodes which are topological nodes. Topological nodes include non-bivalent nodes and bivalent nodes at which a change in lane topography occurs. As used herein, for a digital map using an "undirected graph" form, a "bivalent node" refers to a node connected to 2 arcs of the respective map. A "non-bivalent node" is connected to 1, or greater than 3 arcs. A non-bivalent node may be connected to any number of arcs other than 2. For a digital map using a "directed graph" form, a bivalent node used in representing a one way road is connected to one incoming and one outgoing arc, while a bivalent node used in representing a two way road will be connected to two incoming and two outgoing arcs i.e. two incoming-outgoing arc pairs. A non-bivalent node will be connected to three or more incoming-outgoing arc pairs or to differing numbers of incoming and outgoing arcs. Whatever the form of the digital map i.e. whether a directed or undirected graph form, bivalent nodes include nodes connected to two arcs. In the case of a directed graph form map, bivalent nodes additionally include nodes connected to two incoming-outgoing arc pairs. Types of non-bivalent nodes include bifurcation nodes, convergence nodes and junction nodes. A non-bivalent node is associated with a change in the road network topology, such as a T-junction, crossing etc.

Non-bivalent nodes are considered to be road network topology significant, and may be referred to herein as "topology nodes". In contrast, bivalent nodes include nodes which are not road network topology significant. Such nodes may be included e.g. to serve specific application or map provider requirements, and represent a continuation of a road element. In accordance with the invention, only bivalent nodes at which a change in lane topography occurs are considered to be topological nodes included in the abstraction of the first and second digital maps. Such bivalent nodes are referred to herein as "lane nodes".

A lane node as defined herein is a bivalent node at which a change in lane topography occurs. Lane nodes include nodes at which a change in a number of lanes occurs. The incoming and outgoing arcs are then associated with different numbers of lanes. The incoming and outgoing arcs are indicative of road areas of the road network having different numbers of lanes. It will be appreciated that a map e.g. first digital map which does not include lane geometry information may still include lane nodes, since it may comprise data indicative of the number of lanes associated with arcs thereof.

The abstraction of each one of the first and second digital maps (which may be referred to as "the abstracted map") includes a subset of the nodes of the respective map. The subset includes only the topological nodes of the respective map. The abstraction of the map may include all topological nodes thereof (in the region being considered). The original first and second digital maps from which the abstracted maps are derived, may be referred to as the "original" maps.

The nodes of the first and second digital maps may be associated with respective attributes, indicative of the type of the node. Thus, in some embodiments the step of determining the abstraction of each of the first and second digital maps may comprise identifying a subset of the nodes of the respective map which are topological nodes by reference to attribute data associated with the nodes of the map. The attribute data may be directly or indirectly indicative of whether a node is a topological node. The step of determining the abstraction of each of the first and second digital maps may comprise removing the non-topological nodes of the respective one of the first and second digital maps e.g. removing bivalent nodes which are not lane nodes.

Determining the abstractions of the first and second digital maps effectively involves removing some of the content of the original maps so as to leave only the content relevant to determining the map linkage data providing a correspondence between the first and second digital maps. Thus the abstractions of the first and second digital maps contain less content than the original maps. They are simplifications of the original maps. As some of the nodes of the original map are removed, the arcs of the abstracted map will differ from those of the original map. For example, where a bivalent node which is not a lane node has been omitted, the arc of the abstracted map may correspond to a plurality of the arcs of the original map connecting consecutive topological or lane nodes on either side of the omitted bivalent node. Thus, the structure of the abstracted first and second digital maps differs from that of the original (first and second) maps.

Data indicative of the abstraction of the first digital map and data indicative of the abstraction of the second digital map is generated. Such data may be stored e.g. as part of the map linkage data product generating system.

The abstracted first and second digital maps each comprise a plurality of stretches connected by nodes. Each stretch may correspond to one or more arcs of the original map. A stretch has a direction representing a driving direction for the stretch. For example, a single stretch of the abstracted map extending between adjacent nodes included in the abstracted map may encompass a plurality of arcs of the original map, where one or more intervening non-lane bivalent node was present in the original map, and thus omitted from the abstracted map. Each stretch of the abstraction of the first or second digital map corresponds to a set of one or more arcs of the respective one of the first and second digital maps from which the abstraction was derived, the set of one or more arcs being those arcs extending between consecutive topological nodes of the one of the first or second digital maps.

The abstraction of each of the first and second digital maps may be associated with data from the original one of the first and second digital maps from which it is derived for use in determining the map linkage data product. For example, the abstraction of each map may be associated with data indicative of arcs e.g. arc identifiers associated with the original map to enable corresponding arc sections of the first and second digital maps to be determined based on a correspondence between stretches, or portions thereof, of the abstracted maps. The original map data may be associated in any manner with the abstraction of the map, whether directly or indirectly e.g. using a pointer etc. A stretch of the abstracted may be associated with data indicative of the arc or arcs of the original map to which it corresponds.

It will be appreciated that where the first and second digital maps, or the abstractions or elements thereof, are said to be indicative of, or associated with data indicative of, something, they may in any way be indicative of or associated with data indicative of that thing, whether directly or indirectly. References to "indicative of" something may encompass the element being associated with data indicative of that thing. For example, the abstractions of the first and second digital maps may not include road geometry e.g. trajectory, such as centreline or lane geometry e.g. trajectory, such as centreline data, but may instead refer to the applicable data in the original map from which the abstraction is derived e.g. using any suitable reference, such as a pointer. Thus, given that each stretch of the abstracted map may correspond to one or more arcs of the original map, the associated trajectory data (whether in relation to a road or lane) may be provided by a reference to a concatenation of the relevant trajectory data from the original map e.g. to at least a portion of the trajectory line data associated with one or more arcs of the original map.

Where the one of the digital maps includes lane geometry data and the other does not, the structure of the topological nodes of the digital maps may differ. For example, this may enable the trajectory of individual lanes of a group of multiple lanes associated with a given road area to be more accurately described in the digital map having lane geometry data. Such lanes may laterally diverge and converge with one another along the length of a road area of which they form part. In contrast, in the digital map without lane geometry data, where a group of multiple lanes is present associated with a road arc, these will each be assumed to follow the same trajectory as the overall road arc.

It has been found that by first abstracting the first and second digital maps in the manner described, and then using the abstracted maps to determine a map linkage data product providing a correspondence between the first and second digital maps, a correspondence between the first and second digital maps may be more easily determined. It is thought that this is because the abstraction of the maps include only relevant content i.e. topological (road network significant) nodes, and stretches connecting the nodes. This may facilitate the process of identifying correspondences between the maps.

The use of abstractions of the first and second digital maps is also advantageous as they enable correspondence between the maps to be obtained based on geometric features e.g. a geometric identification and description of nodes and arcs. This may provide a correspondence system which is independent of any particular map product system specific attributes or identification schemes, enabling it to be used with a wide variety of digital map types, obtained from different map production environments.

A further advantage of using the abstractions of the first and second digital maps to obtain the map linkage data product is that these abstractions represent the network topology and exclude certain further information. Thus, any update to the original map that does not affect such topology, will not necessitate changes to the map linkage data product. This may reduce the extent to which the map linkage data product needs to be updated if changes to the underlying first and second digital maps occur.

The step of using the abstractions of each of the first and second digital maps (the abstracted maps) to obtain the map linkage data product involves using the abstractions of the first and second digital maps to determine a correspondence between the original first and second digital maps. The method may involve using the abstractions of the first and second digital maps to identify corresponding arc sections in the first and second digital maps. This may be achieved using one or more rules.

The step of using the abstractions of each of the first and second digital maps (the abstracted maps) to obtain the map linkage data product may comprise using the abstractions of the first and second digital maps to identify a correspondence between the original first and second maps based at least in part on a similarity in shape between stretches of the abstracted first and second digital maps. The shape of a stretch may be represented by the shape of a centreline of the stretch.

It has been found that determining a correspondence between the abstracted maps by consideration of the stretches, rather than the nodes thereof, may facilitate identifying the correspondence e.g. identifying corresponding arc sections of the original maps. In general, the correspondence between the abstracted maps may be more evident when considering stretches between the nodes. The first and second digital maps both describe the same road network, and thus the abstractions of these maps would be expected to include stretches, or portions of stretches, of similar shape, representing the same road elements of the road network. In comparison, the location of the nodes of different digital maps may vary significantly, even when representing the same portion of a road network, due e.g. to different map generation rules, the way in which road shapes are abstracted in obtaining the map, and topological differences between the maps.

The similarity in shape between stretches of the abstracted first and second digital maps may be assessed based on a similarity in shape of a middle portion of the stretches. The middle portion refers to the longitudinally middle portion thereof. For example, the shape of stretches may be compared starting from a mid-point of each stretch. The method may comprise associating respective markers with the mid-points of stretches in each of the abstracted maps, and comparing the shape of the stretches in the abstracted maps starting from the markers.

The similarity in shape between stretches of the abstracted first and second digital maps may be performed by iterating over each stretch in each of the maps. For example, starting at the mid point of a stretch in the abstraction of the first map, the shape of that stretch may be compared to the shape of each stretch of the abstraction of the other map starting at the mid point of each stretch.

Embodiments in which the similarity in shape between stretches is assessed based on a similarity in the shape of the middle portion of the stretches are advantageous in that these portions of the stretches are, by definition, furthest from the topology nodes of the abstracted maps, facilitating the comparison. As explained above, it is easiest to find a correlation between the first and second abstracted maps in regions away from the nodes, as such regions are not subject to differences e.g. based on the particular topology used in the maps. A correspondence should easily be found between stretches in the abstractions of the two maps which represent the same road portion of the road network.

The similarity in shape between stretches may be assessed in any suitable manner. The assessment of similarity between stretches may take into account the curvature of the stretches, and optionally the location and orientation of the stretches. For example, the similarity in shape between stretches may be assessed by reference to a Frechet distance between the stretches. Frechet distance provides a way of assessing similarity of curves taking into account a location and ordering of the points along the curves.

Alternatively or additionally, the step of using the abstractions of each of the first and second digital maps (the abstracted maps) to obtain the map linkage data product may comprise exploring paths in the abstraction of each of the first and second digital maps between reference points along the stretches thereof to obtain connectivity information for each abstracted map, and using the connectivity information in obtaining the map linkage data product. The step of exploring paths and obtaining connectivity information is thus performed in relation to each one of the abstracted maps (separately). The points may be any suitable reference points along the stretches. The connectivity information may be in the form of a connectivity map for the abstracted map. The step of exploring paths in the abstraction of each one of the first and second digital maps between points may comprise determining a route between the points. The method may comprise comparing the connectivity information obtained in relation to each one of the abstracted maps, determining a correspondence between the connectivity of the abstracted maps, and using the determined correspondence between the connectivity in determining the correspondence between the original first and second digital maps. For example, routes determined between points in each of the maps may be compared, such as by a map matching technique, to determine correspondence information. The step of determining connectivity information may comprise exploring paths in each of the first and second digital maps between multiple pairs of points along stretches in each map, e.g. by iterating over multiple points in each of the maps.

Obtaining and using connectivity information for the abstracted maps in obtaining the correspondence between the first and second digital maps in this way may be advantageous in combination with consideration of the similarity of the shapes of stretches of the abstracted maps. This is because, as discussed above, the assessment of the similarity of the shape of stretches inherently involves looking at regions between the nodes of the abstracted map. While this may facilitate determining a correspondence between the original maps by avoiding considering more complicated node areas, in order to obtain the correspondence between the original maps for use in the map linkage data product, ideally connectivity between the stretches is additionally taken into account. The step of providing a path analysis based on reference points along stretches has been found to provide a simple way to obtain such connectivity information, rather than attempting to directly compare the abstracted maps in the node area. The connectivity information enables a correspondence between the original maps in the region of a node to be taken into account.

The connectivity information may be determined in the region of one or more nodes of each abstracted map. For example, the method may comprise, for one or more nodes of each abstracted map, identifying a start location on an incoming stretch to the node of and an end location on an outgoing stretch from the node (i.e. after passing through the node), and exploring paths through the abstraction of the map between the start location and end location. This may be useful in particular in determining correspondences between beginning and end parts of a stretch. In other embodiments, a start location may be provided on a first one of a sequence of connected stretches of each map, with the end location being on a final stretch of the sequence of connected stretches. The method may comprise determining the map correspondence based upon a route between the start and end locations. In these cases, the method may proceed in the manner of a map matching algorithm. This method may enable longer sequences of connected stretches e.g. including three or more stretches, to be taken into account. The method may be repeated e.g. iterated between pairs of points in each of the abstracted maps.

In some embodiments, the reference points along the stretches between which paths are explored to obtain the connectivity information correspond to the mid-points of the stretches. The points may then correspond to the markers between which the shape of stretches is compared. Thus, in some embodiments in which markers are associated with the mid-points of stretches for use in comparing the shape of the stretches, the step of obtaining the map linkage data product further comprises exploring paths in the abstractions of each of the maps between the markers to obtain connectivity information for each abstracted map, and using the connectivity information in obtaining the map linkage data product. This may provide a simpler method, in which both connectivity and similarity analysis are based on the same reference markers along the stretches.

The most appropriate rules to be used in determining the correspondence between the first and second digital maps may depend upon various factors e.g. on the type of the first and second digital maps involved. Other rules may additionally or alternatively be used to those exemplified herein.

The map linkage data product provides a correspondence between the first and second digital maps i.e. between the original maps, rather than the abstraction of the maps. The map linkage data product may provide a correspondence (e.g. direct link) between arc sections of the maps. The map linkage data product may comprise, for each one of a plurality of arc sections of the first digital map, data indicative of a corresponding arc section of the second digital map. The map linkage data product provides a one to one correspondence between arc sections of the first and second digital maps. Thus the map linkage data product may comprise data indicative of a plurality of pairs of corresponding arc sections, each pair comprising an arc section of the first digital map (which may be referred to as a first arc section) and an arc section of the second digital map (which may be referred to as a second arc section). Any reference to a map linkage data product herein may be defined in this manner. The map linkage data product may enable, for a starting arc section in either one of the first and second digital maps, a corresponding arc section in the other one of the first and second digital maps to be obtained. Thus, the map linkage data product provides a correspondence between the first and second digital maps (i.e. the arc sections thereof) in either (both) directions.

An arc section as used herein (including in those aspects and embodiments of the invention relating to the use of the map linkage data or data product below) corresponds to a portion of an arc of the original first or second digital map as appropriate. The portion is a longitudinal portion of the arc i.e. along the length thereof. The data indicative of an arc section may comprise data indicative of the longitudinal portion of the arc of the first or second digital map defining the arc section. The longitudinal portion is a subset of the arc in the longitudinal direction. The data indicative of the arc section may comprise an arc identifier, an arc section start location and an arc section end location. The start location and end locations are locations along the length of the arc of the original map. The arc identifier and arc section start and end locations together define the arc section, enabling it to be identified with respect to the applicable digital map. The arc identifier may be any such identifier that enables the arc to be identified in the applicable digital map e.g. an arc reference. The arc section start and end locations may be defined in terms of an offset distance from a start node of the arc in the direction of the arc. The offset distance may be in absolute terms e.g. a distance in metres, or in relative terms e.g. by reference to a percentage of the length of the arc.

In some embodiments the map linkage data product may provide a correspondence between the first and second digital maps at a lane level rather than just at a road level. As stated above, an arc section corresponds to a longitudinal portion of an arc of the first or second digital map. The arc may be considered to be a longitudinal subset of the arc. In embodiments at least some of the arc sections of at least one of the first and second digital maps are additionally a lateral portion i.e. subset of the arc of the respective one of the original first or second digital map. The data indicative of such arc sections further comprises data indicative of a lateral portion of the arc of the (original) one of the first or second digital maps defining the arc section. The lateral portion is then a subset of the arc in the lateral direction. The data indicative of the lateral portion of the arc may be indicative of a subset of a set of lane trajectory lines associated with the arc of the one of the first or second digital maps. The set of lane trajectory lines represent the trajectory of a group of lanes of a road area represented by the arc. In these embodiments, the map will be a map having lane geometry information.

For example, a longitudinal section of an arc of a digital map which includes lane geometry information may correspond to more than one (longitudinal) arc section of a digital map which does not include lane geometry information. Different (longitudinal) arc sections in the map which does not include lane geometry information may correspond to the trajectories of different subsets of the lanes represented by the map which includes lane geometry information. Similarly, the same arc portion of a map which does not include lane geometry information may correspond to each one of a plurality of arc sections of a map which does include lane geometry, the arc sections of the map including lane geometry corresponding to different lateral subsets of a longitudinal portion of an arc of that map. Each one of the plurality of arc sections of the map including lane geometry corresponds to a different lateral portion of an arc, and thus constitutes a unique arc section. There is therefore still a one to one correlation between arc sections of the digital maps. However, the same arc section in one of the maps may be the corresponding arc section for more than one distinct arc section of the other one of the maps.

In embodiments in which at least some of the arc sections are additionally a lateral portion of an arc of the respective one of the first or second digital maps, the respective one of the first or second digital maps is a map which comprises lane geometry data, wherein each arc of the digital map is associated with data indicative of a set of lane trajectory lines representing the trajectory of each one of the group of one or more lanes of a road area represented by the arc, and the arc section (that is a lateral portion of an arc) corresponds to a subset of the set of lane trajectory lines represented by the arc of the digital map.

The method may comprise, for first and second digital maps, wherein one of the first and second digital maps includes lane geometry data and the other one does not, identifying longitudinal sections of arcs in the first and second digital maps which correspond to one another, and determining a lateral portion of the longitudinal arc section of the map including lane geometry data which may be taken to correspond to the arc section of the map which does not include lane geometry to thereby provide the corresponding arc sections for inclusion in the map linkage data. The method may comprise determining a lateral projection of the longitudinal arc section of the map which does not include lane geometry data, and determining that the arc section corresponds to any lateral portion of the longitudinal arc section of the other one of the first and second digital maps that lies within the area of the lateral projection. The lateral projection may be on one or both sides of a centreline of the arc section. The extent of the lateral projection on either side of the centreline may be determined using any suitable rules. The lateral projection may be a geometrical projection. The lateral portion of the longitudinal arc section of the other one of the first and second digital maps may correspond to a subset of the set of lane trajectory lines represented by the arc section.

There may be some arc sections of the first and second digital maps for which no corresponding arc section exists in the other one of the first and second digital maps. Such information may be useful. Thus, in some embodiments, the map linkage data product comprises, for one or more arc sections of the first or second digital map, an indication that no corresponding arc section exists in the other of the first and second digital maps. For example, where one of the first and second digital maps comprises lane geometry information, that map may not provide full coverage of the area. Thus, at least some arc sections of the other one of the first and second maps may be associated with an indication that no corresponding arc section exists in the other one of the first and second digital maps that comprises lane geometry information.

In some embodiments, the map linkage data product comprises, for each arc section of the first and second digital maps, either data indicative of a corresponding arc section of the other one of the first and second digital maps, or an indication that no corresponding arc section exists.

The map linkage data product may be such that for every longitudinal section of an arc of each the first and second digital maps, there is an entry indicative of either a corresponding arc section of the other one of the first and second digital maps, or an indication that no corresponding arc section exists. The arc sections of each of the first and second digital maps may together cover all longitudinal portions of the arcs of the original map without overlap.

The map linkage data product may be in any suitable form. In some embodiments the map linkage data product comprises at least one map linkage table providing the correspondence between the first and second digital maps. The or each map linkage table may be in the form of a look-up table. The or each linkage table may, for example, comprise rows and columns. In exemplary embodiments, each pair of an arc section and corresponding arc section of the first and second digital maps may be provided in a respective row of the table. However, the form of the map linkage table is not important, and it may be provided in any suitable manner, including distributed forms, provided that it provides the required linkage between the first and second digital maps i.e. between arc sections thereof when operated on by an appropriate correspondence module. While single map linkage table (e.g. providing, for each of a plurality of arc sections of the first (such as SD) digital map, a corresponding arc section of the second (such as HD) digital map), will support determining a correspondence between the arc sections of the first and second digital maps in both directions, it is envisaged that dedicated map linkage tables may alternatively be provided for use in converting arc sections in each respective direction between the first and second digital maps e.g. first (such as SD) to second (such as HD) and vice versa. Thus the map linkage data product may comprise a plurality of map linkage data tables.

The step of obtaining the map linkage data product may be performed in any manner. In some embodiments the method is performed by a server.

The present invention extends to a map linkage data product obtained in accordance with the first aspect of the invention in any of its embodiments, and to a method of using such a map linkage data product.

The map linkage data product may be provided by data stored in one or more locations i.e. it may be a distributed product. The map linkage data product may be provided by one or more databases indicative of the map linkage data. The map linkage data may, for example, be stored by a server. The server may then stream the data to client devices as required. For example, as described below, relevant map linkage data may be provided to a client device e.g. navigation device requiring correspondence data e.g. on a tiled basis. The present invention also extends to a computer readable medium comprising the data product in accordance with the invention of any of its aspects or embodiments.

The map linkage data comprises data indicative of the correspondence between arc sections of the first and second digital map. Thus, the map linkage data is digital map data. It has been found that the map linkage data may be provided as an add-on to the first and second digital map data. The map linkage data may be provided as a map layer.

To provide a more efficient delivery of the first or second digital map data, the first and second digital maps may each be represented as a plurality of tiles, each tile representing a portion of the overall map area and including data indicative of the objects falling within the area covered by the tile. For instance, each tile may contain at least the map object data pertaining to a set of arcs and nodes defining the navigable (e.g. road) network in that area. This may include object data defining the arcs/nodes themselves (e.g. defining the road/lane geometry in that area), and also data for objects associated with the arcs/nodes, e.g. traffic signs, and so on. Of course any other suitable information that may desirably be included in the map may also be stored for a tile. Such a tile-based structure may support the delivery of the map data using a tile based streaming method. The map linkage data product may advantageously similarly be provided on a tiled basis. This will enable tiles to be updated independently. For example, updating of the map linkage data tile may be triggered by the update of the corresponding tile of the first or second digital map. As mentioned above, not all updates of the first or second digital map may necessitate an update to the map linkage data, however. A change to the first or second digital map data within a tile may require the updating of the abstraction of the applicable digital map and the correspondence data enabling a correspondence to be obtained between the abstraction of that digital map and the abstraction of the other one of the first and second digital maps. A tile-based structure enables only those tiles which require updating to be updated rather than the entire map, and/or the provision of only the updated tiles to a vehicle system to ensure that the vehicle is using up to date map data e.g. which matches corresponding map data held at a server.

In embodiments the map linkage data product is in the form of a map layer, the map layer being associated with a map layer comprising the first digital map data and/or a map layer comprising the second digital map data. Alternatively or additionally the first and second digital maps are tile based digital maps, each tile comprising map data in respect of a given geographic area, and the map linkage data product is also tile-based, each map linkage product data tile comprising map linkage data in respect of a given tile of the first and second digital maps. The method of providing the map linkage data product may comprise providing map linkage data in any of the forms described i.e. in a layered and/or tile based form.

Digital map data comprising the first digital map data, second digital map data and map linkage data e.g. in layers may be compiled using data obtained from the first and second digital map production systems and a map linkage data product generation system.

The present invention also extends to the use of the map linkage data or map linkage data product obtained in accordance with the first aspect of the invention in any of its embodiments.

The method may comprise obtaining location data with respect to a starting one of the first and second digital maps for which a correspondence is required in the other one of the first and second digital maps;
using the map linkage data to determine corresponding location data with respect to the other one of the first and second digital maps;
and generating data for output indicative of the determined corresponding location data with respect to the other one of the first and second digital maps, and optionally outputting the generated data indicative of the determined corresponding location data with respect to the other one of the first and second digital maps.

In accordance with a second aspect of the invention there is provided a method of determining a correspondence between first and second digital maps,
wherein the first digital map comprises a plurality of arcs connected by nodes representing the road network in a geographic area;
and the second digital map comprises a plurality of arcs connected by nodes representing the road network in the geographic area;
the method comprising:
   obtaining location data with respect to a starting one of the first and second digital maps for which a correspondence is required with respect to the other one of the first and second digital maps;
   and using map linkage data to determine corresponding location data with respect to the other one of the first and second digital maps;
   wherein the map linkage data comprises data indicative of a plurality of arc sections of the first digital map, and, for each arc section of the first digital map, data indicative of a corresponding arc section of the second digital map, wherein the map linkage data enables, for a starting arc section in either one of the first and second digital maps, a corresponding arc section in the other one of the first and second digital maps to be obtained;
   the method further comprising generating data for output indicative of the determined corresponding location data with respect to the other one of the first and second digital maps.

The present invention in accordance with this further aspect may include any of the features described in reference to other aspects or embodiments of the invention to the extent it is not mutually inconsistent therewith. In these further aspects and embodiments of the invention relating to the use of the map linkage data (which may be in the form of a map linkage data product), the first and second digital maps and the map linkage data may each be (and/or may be obtained) in accordance with any of the embodiments previously described in relation to the earlier aspect of the invention, and may include any of the features described. The map linkage data forms part of a map linkage data product. Thus, the map linkage data may include any of the features described in relation to the map linkage data product earlier. For example, the arc sections are as previously defined in relation to the generation of the map linkage data/data product, and may be in accordance with any of the arrangements above described.

The method in accordance with any of the aspects or embodiments of the invention relating to the use of the map linkage data or map linkage data product, including the method in accordance with the second aspect, may be implemented using a correspondence module which has access to the map linkage data. The correspondence module may comprise a set of one or more processors performing the functionality described.

The correspondence module may be arranged to receive location data respect to a starting one of the first and second digital maps, to determine corresponding location data with respect to the other one of the first and second digital maps using the map linkage data and to output data indicative of the determined corresponding location data. Thus, the correspondence module receives, as input, location data with respect to a starting one of the first and second digital maps, and is arranged to provide as output, corresponding location data with respect to the other one of the first and second digital maps. The method of the further aspects or embodiments of the invention relating to the use of the map linkage data or map linkage data product may comprise using a correspondence module to determine the correspondence between the first and second digital maps, wherein the method comprises inputting the obtained location data into the correspondence module, and the correspondence module performing the steps of using the map linkage data to determine the corresponding location data and generating the data for output indicative of the determined corresponding location data.

In accordance with a third aspect of the invention there is provided
a correspondence module for determining a correspondence between first and second digital maps;
wherein the first digital map comprises a plurality of arcs connected by nodes representing the road network in a geographic area;
and the second digital map comprises a plurality of arcs connected by nodes representing the road network in the geographic area;
wherein the correspondence module is configured to:
   receive input location data with respect to a starting one of the first and second digital maps for which a correspondence is required with respect to the other one of the first and second digital maps;
   and use map linkage data to determine corresponding location data with respect to the other one of the first and second digital maps;
   wherein the map linkage data comprises data indicative of a plurality of arc sections of the first digital map, and, for each arc section of the first digital map, data indicative of a corresponding arc section of the second digital map, wherein the map linkage data enables, for a starting arc section in either one of the first and second digital maps, a corresponding arc section in the other one of the first and second digital maps to be obtained;
   and generate data for output indicative of the determined corresponding location data with respect to the other one of the first and second digital maps.

The present invention in accordance with this further aspect may include any of the features described in reference to other aspects or embodiments of the invention to the extent it is not mutually inconsistent therewith. In particular, the correspondence module may be configured to perform any of the steps described in relation to the method, and vice versa.

The invention extends to a system for determining a correspondence between first and second digital maps, the system comprising the correspondence module and the map linkage data e.g. a map linkage data product.

In these further aspects and embodiments of the invention relating to the use of the map linkage data or data product (whether or not a correspondence module is used), the location data (for which corresponding location data is obtained)may be indicative of any type of location. The location is a location of interest. The location data is map-matched location data with respect to the starting one of the first or second digital maps. The corresponding location data is map-matched location data with respect to the other one of the first and second digital maps. A map matched location refers to a location defined with respect to the applicable digital map e.g. on a road element or elements of the road network represented by the map. This is in contrast to a GPS location or geographic coordinate system (GCS) location or similar. Both the map matched location data with respect to the starting one of the first and second digital maps, and the corresponding map matched location data with respect to the other one of the first and second digital maps represent the same part of the real word road network represented by each of the digital maps. It will be appreciated that the location and corresponding location may have different GPS/GCS or similar coordinates while still describing the same "real world" part of a road.

The location data may be indicative of a point location or a line location. Location data indicative of a point location may be indicative of a distance along an arc e.g. an offset from a starting node of an arc of the starting map. Location data indicative of a line location may be indicative of a starting point and end point of the line location with respect to a respective arc or arcs of the starting map. Each of the starting point and end point may be described in terms of a distance along an arc. For example, each of the starting and end points may be described as an offset from a starting node of an arc. The starting point and end point may be with respect to the same or different arcs. For example, where the line location is indicative of a route, the starting point and end point are typically with respect to different arcs (i.e. the starting and ending arcs of a plurality of connected arcs representing the route). Optionally the location data may additionally comprise data indicative of a direction of travel associated with the location, and/or indicative of lateral position. For example, lateral position data may be expressed in terms of a lateral offset from a reference line associated with the arc(s) forming part of the location e.g. a centreline thereof.

In embodiments the location data is indicative of a line location. A line location may be at least a portion of one or more arcs of the (starting) map representing at least a portion of one or more road elements of the road network. The at least a portion of an arc may be only a portion of an arc or an entire arc (representing a portion of a road element or an entire road element of the road network represented by the map), or may include at least a portion of more than one connected arc (representing at least a portion of more than one road element of the road network). In some embodiments, the line location may represent a route through the road network. A route comprises a connected sequence of road elements of the road network. In these embodiments the line location may comprise at least a portion of each of a plurality of connected arcs.

As mentioned above, it may not be possible to identify a continuous corresponding line location e.g. where the coverage of the first and second digital maps differs. Thus, for location data indicative of a given line location with respect to one of the first and second digital maps, corresponding location data indicative of one or more corresponding line location may be determined with respect to the other digital map. Where the location data is indicative of a point location, corresponding location data indicative of a single corresponding location will be determined. For a given starting line location, the one or more corresponding line location portions may or may not cover the entire length of the line location i.e. there may be one or more portions of the starting line location for which no correspondence is found.

The corresponding location data indicative of one or more corresponding line location may be indicative of starting and end points of each corresponding line location with respect to arc(s) of the other one of the first and second digital maps. Each of the starting point and end point of a corresponding line location may be described in terms of a distance along an arc of the map. For example, each of the starting and end points may be described as an offset from a starting node of an arc. The starting point and end point may be with respect to the same or different arcs. The corresponding location data may additionally comprise data indicative of a direction of travel associated with the corresponding location and/or indicative of lateral position.

The location data obtained (e.g. received by the correspondence module) may be of any suitable form. The data may have been pre-processed e.g. by a map based application from which the data is received. For example, pre-processing of the location data may be performed e.g. to provide an input to a correspondence module which performs the method. The location data is with respect to the starting one of the first and second digital maps i.e. with respect to one of the first and second digital maps to which the map linkage data relates. Some pre-processing may be required in order to obtain location data in respect of the starting one of the maps, as illustrated below by reference to the case in which the location data represents a route requiring transformation between maps used by different map based applications.

An input line location may be expressed in terms of starting and end points, each being in terms of a distance along an arc of the starting one of the first and second digital maps. Such location data may comprise data indicative of one or more arcs e.g. arc identifier(s) and data indicative of a distance of each of the starting and end points along the respective arc(s). Some pre-processing may be performed to obtain input location data of such a form e.g. for input to a correspondence module. In some simple embodiments, the input location data may simply be in the form of a list of one or more arc identifiers of the starting map.

In any of the embodiments of the invention, the location data may be associated with data indicative of the one of the first and second digital maps to which it relates to enable it to be determined (e.g. by a correspondence module) which of the first and second digital maps is the starting one of the maps.

The data indicative of the corresponding location data generated may be associated with data indicative of the one of the first and second digital maps to which it relates.

The step of determining corresponding location data with respect to the other one of the first and second digital maps corresponding to the location data may comprise determining one or more arc sections of the starting one of the first or second digital map included in the map linkage data corresponding to the location data, and identifying one or more corresponding arc sections in the other one of the first and second digital maps included in the map linkage data corresponding to the determined one or more arc sections according to the map linkage data, wherein generating data for output indicative of the corresponding location data with respect to the other one of the first and second digital maps comprises generating data for output indicative of the identified one or more corresponding arc sections of the other one of the first and second digital maps. For example, where the location in the starting map is a point location, an arc section of the starting one of the first and second digital maps containing the point location may be determined, and a corresponding arc section in the other of the first and second digital maps identified. Where the location in the starting map is a line location extending between starting and end points with respect to one or more arcs of the starting map, the method may comprise determining an offset of each of the starting and end points along respective arc(s) of the starting map with respect to starting nodes of the arc(s), identifying arc sections of the starting one of the first and second digital maps included in the map linkage data including and extending between the starting and end points, and determining arc sections with respect to the other one of the first and second digital maps included in the map linkage data corresponding to the identified arc sections.

The map linkage data may comprise at least one map linkage table. The method may comprise (e.g. the correspondence module) identifying one or more arc sections with respect to the starting one of the first or second digital maps in a map linkage table of the map linkage data corresponding to the location data, and retrieving the one or more corresponding arc sections of the other one of the first and second digital maps according to the map linkage table.

A correspondence module may, where provided, be configured to perform such a step. The correspondence module may comprise a retrieval subsystem for retrieving applicable data from the map linkage data based on input location data.

The method comprises accessing the map linkage data, and, where provided, a correspondence module is configured to access the map linkage data. As mentioned above, the map linkage data may be provided as a map layer together with the first and/or second digital map data, or may be provided separately from the first and second digital map data. The method may comprise obtaining the map linkage data from a server. A correspondence module may be configured to obtain the map linkage data from a server. The map linkage data may be provided on a tiled basis.

It has been recognised that the map linkage data described herein is particularly useful in enabling communication between first and second digital map based applications.

In some embodiments the location data is location data obtained based on data received from one of first and second digital map based applications for which a correspondence is required with respect to the other one of the first and second digital maps for use by the other one of the first and second digital map based applications, and the method comprises outputting the data indicative of the determined corresponding location data with respect to the other one of the first and second digital maps to the other one of the first and second digital map based applications for use thereby.

In these embodiments the first and second digital map based applications may respectively use the first and second digital maps. Alternatively, rather than using the first or second digital map itself, the first or second digital map based application may use a digital map of the same type as the first or second digital map but which is different to the first or second digital map. The different maps may emanate from different map providers, for example. In these embodiments the first digital map may be a digital map which does not include lane geometry data. In some embodiments in which the first digital map does not include lane geometry data, the first map based application may use a digital map of the same type (i.e. which does not include lane geometry data), but which is a different map. The second map based application may use the second digital map data. The second digital map may be a map which does include lane geometry data.

In general in embodiments relating to first and second digital map based applications, the first and second digital maps may respectively be maps which do not, and do include lane geometry data.

In embodiments using a correspondence module, the location may effectively be relayed from one of the first and second digital map based applications to the other one thereof via the correspondence module, with the correspondence module providing any necessary conversion of the location to the digital map used by the other one of the first and second digital map based applications.

In exemplary embodiments the location data is indicative of a line location with respect to one of the first and second digital maps representing a route determined by the digital map based application that uses that digital map for which a correspondence is required in the other one of the digital maps for use by the other digital map based application. The location data may be with respect to the first digital map i.e. being a route determined by the first digital map based application. The determined corresponding location in the other one of the first and second digital maps is then a line location in the second digital map.

In embodiments in which the first digital map based application uses the first digital map, the route will be a route determined by the first digital map based application with respect to the first digital map. The method may comprise obtaining (e.g. the correspondence module receiving) the location data i.e. data indicative of the route from the first digital map based application. In other embodiments, the first digital map based application is a map based application which uses a digital map which is different to the first digital map but of the same type as the first digital map. Thus the digital map used by the first digital map based application also comprises a plurality of arcs connected by nodes representing the road network in a geographic area, and is indicative of a road geometry of a road network. The digital map may not be indicative of a lane geometry of the road network. The digital map used by the first digital map based application and the first digital map may both include any of the features described in respect of the first digital map. The digital map used by the first map based application and first digital map may both be SD maps. The second digital map may be an HD map.

It will be appreciated that the map linkage data provides a correspondence between the first and second specific digital maps. Where a route is generated by a first digital map based application which uses a digital map different to the first digital map but of the same type as the first digital map, it is necessary to first convert the route into a route with respect to the first digital map for providing the location data (e.g. for input into the correspondence module). This may be appropriate, for example, where the first digital map and the map used by the first digital map based application emanate from different map providers, or where, for some reason, it has not been possible to generate map linkage data for the digital map used by the first digital map based application. In embodiments in which the first digital map based application uses a digital map which is different to the first digital map but of the same type as the first digital map (e.g. a map which does not include lane geometry data), and the second digital map based application uses the second digital map (e.g. a map which does include lane geometry data), the route may be a route corresponding to a route determined by the first digital map with respect to the digital map used by the first digital map based application. The step of obtaining the location data (e.g. for input to a correspondence module where provided) may comprise obtaining data indicative of the route determined by the first digital map based application with respect to its digital map, and determining data indicative of a corresponding route with respect to the first digital map to provide the location data for use in the methods herein (e.g. for input to the correspondence module).

Determining a corresponding route with respect to the first digital map may be performed in any suitable manner e.g. using map matching techniques. It is envisaged that a map agnostic referencing system may be used. For example a route determined by the first digital map based application with respect to its digital map may first be described using a map agnostic referencing system, with the map agnostic description of the route then being used to determine the route with respect to the first digital map. In other words, the map agnostic referencing system may be used as an intermediate part of the process of determining a corresponding route with respect to the first digital map. Suitable map agnostic location referencing systems include, but are not limited to, the OpenLR system, and the Agora-C system. The steps involved in converting a route determined by the first digital map based application with respect to its own map to a route with respect to the first digital map may be carried out in any desired part or parts of the system. For example, this may be performed on the client side of the system where at least some of the steps of the method are performed on the client side. However, this need not be the case.

In any embodiments involving first and second digital map based applications, the first digital map based application may be a navigation application. The route may be a predicted route expected to be taken by a vehicle e.g. to an inferred destination or may be a calculated route. A calculated route may be a route based on any desired route planning criteria e.g. a fastest route, shortest route, or most energy efficient route, or may be based on any custom criteria. The route may be a route from a current location of the vehicle. The second digital map based application may be of any type which requires a correspondence to the location data with respect to its second digital map. The method may extend to the second digital map based application receiving the output determined corresponding location data with respect to the second digital map. The determined corresponding location data with respect to the second digital map may provide a representation of the route with respect to the second digital map. The representation of the route may correspond to the entire route, or only a portion or portions thereof, depending upon whether it was possible to obtain a correspondence for the entire line location in the first digital map which represents a route.

The second digital map based application may use the determined corresponding location data with respect to the second digital map in any suitable manner required by the functionality of the second digital map based application. In some embodiments the second digital map uses the determined data indicative of the corresponding location data in the second digital map to determine a representation of the route with respect to the second digital map for use in planning the motion of a vehicle traversing the route. In these embodiments the second digital map based application is arranged to provide motion planning functionality in respect of the motion of a vehicle. The motion planning may support autonomous functionality of the vehicle. It will be appreciated that the functionality may relate to higher or lower levels of autonomous functionality, e.g. ranging from assisted braking or steering to full levels of automation. The autonomous functionality may range from such functionality required by a vehicle while under the control of a human driver to functionality required for autonomous operation of a vehicle without the supervision or control of a human driver.

The method may comprise the second digital map based application using the determined data indicative of the corresponding location data (i.e. one or more corresponding line location)with respect to the second digital map in obtaining horizon data indicative of a horizon for the vehicle. The horizon data comprises data indicative of a prediction of a plurality of possible paths that the vehicle may travel in the immediate future through a portion of the navigable network. The paths may be paths that may be travelled by the vehicle from a current position of the vehicle. The route determined by the first digital map based application may be considered to provide a most probable route that may be traversed by the vehicle in the immediate future. The determined corresponding location data (e.g. one or more corresponding line locations) with respect to the second digital map may provide portions of a most probable route that a vehicle may travel in the immediate future (i.e. from a current location of the vehicle). Knowledge of such a route is therefore useful in obtaining the horizon data for the vehicle. In some embodiments the second digital map based application is a horizon data obtaining subsystem.

The first and second digital map based applications may be server or client side based. For example, the first digital map based application may be a navigation application associated with a vehicle. The second digital map based application may be a motion planning e.g. horizon data obtaining subsystem associated with a vehicle. However, either or both of the first and second digital map based applications may alternatively be implemented by a server or servers. Regardless of whether the first and second digital map based applications are server or client side based, the correspondence module may be server or client side based. In some embodiments the correspondence module may form part of a vehicle based system, optionally along with the first and second digital map based applications. However, this need not be the case. Any or all of the steps of the methods of using the map linkage data described herein may be implemented on the server side or client side, or combinations thereof.

The location data with respect to the one of the first and second digital maps may be provided by the applicable one of the first and second map based applications and input to a correspondence module (where provided) in response to a request by the other one of the first and second digital map based applications. For example, the second digital map based application may request that a line location with respect to the first digital map corresponding to a route generated by the first map based application is input to the correspondence module for providing a corresponding line location in the second digital map for use by the second digital map based application. Alternatively, it is envisaged that the e.g. first digital map based application may be arranged to automatically provide a route for providing location data for use in the methods herein (e.g. for input to the correspondence module). For example, where the location data is indicative of a line location indicative of a route with respect to the first digital map, the first digital map based application may be arranged to provide a route for use in providing the location data (e.g. for input to the correspondence module) for conversion and use by the second digital map based application whenever it determines a route.

The present invention extends to a correspondence module operable to provide a correspondence between first and second digital maps in accordance with the method of any of the aspects or embodiments described herein.

The first and second digital maps may, in any of the aspects or embodiments of the invention described herein, be SD and HD maps respectively.

The second digital map may comprise lane geometry data and the first digital map may not comprise such data.

The first and second digital map based applications referred to herein are software applications. The map based applications may be map clients. The map based applications may be arranged to perform one or more operations using their respective map data.

References to a processor herein may refer to a set of one or more processors. Thus, it will be appreciated that the system of the invention in its various aspects or embodiments may comprise a set of one or more processors for carrying out any of the steps described. For example, the "means for" carrying out any of the steps may be a set of one or more processors.

A navigation application as referred to herein may be implemented using any suitable device or devices. The application may provide a dedicated mobile navigation apparatus, also referred to as a portable navigation device (PND), or may be implemented by means of an application of a processing device which does not form part of a specific navigation device. For example the invention may be implemented using a suitable computer system arranged to execute navigation software. The system may be a mobile or portable computer system, e.g. a mobile telephone or laptop, or may be a desktop system. The navigation application may form part of an in-vehicle integrated navigation system, or may include both integrated and non-integrated components.

The various functions of the technology described herein can be carried out in any desired and suitable manner. For example, the functions of the technology described herein can be implemented in hardware or software, as desired. Thus, for example, unless otherwise indicated, the various functional elements, stages, "modules" and "means" or "sub-systems" of the technology described herein may comprise a suitable processor or processors, controller or controllers, functional units, circuitry, circuits, processing logic, microprocessor arrangements, etc., that are operable to perform the various functions, etc., such as appropriately dedicated hardware elements (processing circuitry/circuits) and/or programmable hardware elements (processing circuitry/circuits) that can be programmed to operate in the desired manner.

It will be appreciated that as used herein a "server" may generally refer to a set of cluster of one or more server(s). In particular, it will be understood that a server need not be a (single) physical data server but may comprise a virtual server, e.g., running a cloud computing environment. Thus, the server may be a cloud server. It will also therefore be appreciated that a vehicle may receive map data from a plurality of servers, e.g. which may obtain map data for a corresponding plurality of map data sources. Thus, any references to a server herein should be understood to mean "at least one server", except where context demands otherwise. Various other arrangements would of course be possible.

It should also be noted here that, as will be appreciated by those skilled in the art, the various functions, etc., of the technology described herein may be duplicated and/or carried out in parallel on a given processor. Equally, the various processing stages may share processing circuitry/circuits, etc., if desired.

Furthermore, any one or more or all of the processing stages of the technology described herein may be embodied as processing stage circuitry/circuits, e.g., in the form of one or more fixed-function units (hardware) (processing circuitry/circuits), and/or in the form of programmable processing circuitry/circuits that can be programmed to perform the desired operation. Equally, any one or more of the processing stages and processing stage circuitry/circuits of the technology described herein may be provided as a separate circuit element to any one or more of the other processing stages or processing stage circuitry/circuits, and/or any one or more or all of the processing stages and processing stage circuitry/circuits may be at least partially formed of shared processing circuitry/circuits.

The methods in accordance with the invention in any of its aspects described herein may be implemented at least partially using software e.g. computer programs. It will thus be seen that when viewed from further embodiments the technology described herein provides computer software specifically adapted to carry out the methods herein described when installed on a data processor, a computer program element comprising computer software code portions for performing the methods herein described when the program element is run on a data processor, and a computer program comprising code adapted to perform all the steps of a method or of the methods herein described when the program is run on a data processing system. The data processor may be a microprocessor system, a programmable FPGA (field programmable gate array), etc. The present invention thus also extends to a computer program comprising computer readable instructions executable to perform a method according to any of the aspects or embodiments of the invention.

The technology described herein also extends to a computer software carrier comprising such software which when used to operate a display processor, or microprocessor system comprising a data processor causes in conjunction with said data processor said controller or system to carry out the steps of the methods of the technology described herein. Such a computer software carrier could be a physical storage intermediate such as a ROM chip, CD ROM, RAM, flash memory, or disk, or could be a signal such as an electronic signal over wires, an optical signal or a radio signal such as to a satellite or the like.

It will further be appreciated that not all steps of the methods of the technology described herein need be carried out by computer software and thus from a further broad embodiment the technology described herein provides computer software and such software installed on a computer software carrier for carrying out at least one of the steps of the methods set out herein.

The technology described herein may accordingly suitably be embodied as a computer program product for use with a computer system. Such an implementation may comprise a series of computer readable instructions either fixed on a tangible, non-transitory intermediate, such as a computer readable intermediate, for example, diskette, CDROM, ROM, RAM, flash memory, or hard disk. It could also comprise a series of computer readable instructions transmittable to a computer system, via a modem or other interface device, over either a tangible intermediate, including but not limited to optical or analogue communications lines, or intangibly using wireless techniques, including but not limited to microwave, infrared or other transmission techniques. The series of computer readable instructions embodies all or part of the functionality previously described herein.

The present invention in accordance with any of its further aspects or embodiments may include any of the features described in reference to other aspects or embodiments of the invention to the extent it is not mutually inconsistent therewith.

It should be noted that the phrase "associated therewith" should not be interpreted to require any particular restriction on data storage locations. The phrase only requires that the features are identifiably related. Therefore association may for example be achieved by means of a reference to a side file, potentially located in a remote server.

The term "map linkage data product" used herein may be used interchangeably with "map linkage system".

Examples of embodiments of the invention are set out hereafter, and further details and features of each of these embodiments are defined in the accompanying dependent claims and elsewhere in the following detailed description.

Embodiments of the invention have been described with particular reference to the case in which a digital map represents a portion of a road network. As will be appreciated, however, the techniques described herein are not limited to use with digital maps representing a road network, and may be applied to digital maps representing any type of navigable network, comprising, for example, a network of foot paths, cycle paths, rivers, etc. Thus, the term "road network" may be replaced by a reference to a "navigable network" and "road element" or "road segment" with "navigable element" or "navigable segment" etc.

It should be noted that references to an object, a feature, an area, etc. associated with, etc., a tile, or tile data structure, herein should be understood to refer to data indicative of these unless the context demands otherwise. The data may be in any way indicative of the relevant item, and may be directly or indirectly indicative thereof. Thus any reference to an object, a feature, an area, a tile, etc., may be replaced by a reference to data indicative thereof. It should also be noted that the phrase "associated therewith" or "indicative of" should not be interpreted to require any particular restriction on data storage locations. The phrase only requires that the features are identifiably related.

### Brief Description of the Drawings

Various embodiments will now be described, by way of example only, and with reference to the accompanying drawings in which:
Figure 1 illustrates a portion of a road network in the region of a road network junction 100;
Figure 2 illustrates trajectory lines associated with the portions of the road network in the region of junction 100;
Figure 3 illustrates an HD map representation of the junction area shown in Figure 2;
Figure 4A illustrates a map linkage table in accordance with an embodiment of the invention;
Figure 4B illustrates graphically the linkage between SD and HD map arc sections represented by the map linkage table of Figure 4A;
Figure 4C is another view showing the correspondence between SD and HD map arc sections, showing the regions (shaded) in which correspondence between an SD arc section and HD arc sections applies, and obtained based on geometrical projection;
Figure 4D shows the result of using a linkage based on topological projection;
And Figure 4E shows one example of a result of using a linkage based on geometrical projection;
Figure 5 is a further example of a map linkage table in accordance with the invention;
Figure 6 is yet another example of a map linkage table in accordance with the invention;;
Figure 7 is a flow chart illustrating the steps involved in obtaining map linkage data in accordance with one embodiment of the invention;
Figure 8 illustrates the relationship between SD and SDx maps;
Figure 9 illustrates the way in which reference markers may be associated with the mid-points of stretches of an HDx map;
Figure 10A illustrates the reference marker points associated with stretches in one region of the HDx map;
Figures 10B-G illustrate potential paths between the reference marker points of the HDx map shown in Figure 10A;
Figure 11 illustrates the relationship between HD and HDx maps;
Figure 12 is an overview of a system in which the map linkage system of the present invention may be used;
Figure 13 illustrates a modification of the system of Figure 12 to enable the map linkage system to be used therewith;
Figure 14 is an overview of the map data structure used in the Figure 13 system;
Figure 15 is an overview of the horizon system and the way in which it uses the map linkage system;
Figure 16 is a flowchart illustrating the steps performed by the correspondence module of the Figure 15 system;
Figure 17 is a view of a system similar to that of Figure 15, but showing some additional stages to convert an input route to a route with respect to the SD map on which the map linkage system operates;
and Figure 18 illustrates a map matching process which may be used in converting the route to a route with respect to the SD map in the system of Figure 17.

Like reference signs will be used for like elements in the drawings, as appropriate.

The present invention provides a map linkage data e.g. a map linkage system in the form of a map linkage data product, which may be used to determine a correspondence between first and second digital maps. The first and second digital maps are different maps, and are, in embodiments, of different types. The maps cover a particular portion of a road network, such that they provide different representations of that portion of the road network. The map linkage system may be used to determine, for location data with respect to one of the digital maps, corresponding location data with respect to the other one of the digital maps.

The generation of the map linkage data will be described first.

The map linkage data is generated in relation to specific first and second digital maps. The first and second digital maps may be any first and second digital maps. Typically the maps differ in their level of accuracy and/or level of topological detail. The maps may both include lane geometry data, or neither map may include lane geometry data. However, the present invention is particularly applicable to the case in which the first and second digital maps cover a portion of a road network, wherein one of the maps includes lane geometry data in respect of the portion of the road network, and the other does not. For ease of reference, the first digital map may be referred to as the map which does not include the lane geometry data. For the purposes of the exemplary embodiments described herein, the first and second digital maps will be referred to as a "Standard Definition" (SD) map and a "High Definition" (HD) map respectively. SD and HD maps are examples of maps which do not, and do, respectively, include lane geometry data. However, the first and second digital maps may be any first and second digital maps of the types described, and need not be so-called SD sand HD maps. References to SD and HD maps may be replaced by references to a first and second digital map respectively.

The SD and HD maps differ in that the SD map includes road geometry data, but does not include lane level geometry data, while the HD map includes lane level geometry data (and also road geometry data).

Maps are models of the geospatial reality comprising abstractions of reality features. The scope of Standard Definition (SD) maps and High Definition (HD) maps generally is limited to stationary reality features, so these maps do not describe dynamic reality features. Both SD and HD maps include a graph representation of the road network. The graph consists of arcs and nodes. Arcs have associated attributes and are connected by means of nodes. Thus, both SD and HD map data models specify a collection of geospatial features, feature attributes, and feature associations. Although the SD and HD maps share a common representation technology and both describe stationary reality features, they differ in their data model, capturing rules, accuracy, feature coverage, and often also in geographical coverage.

A standard definition (SD) digital map generally describes a road network supporting navigation functions, including, but not limited to:
finding a desired destination (an address or a Point of Interest)
finding a suitable route to the destination from a start location or current location
providing navigation guidance to a human driver.

The SD map describes the road network in terms of junctions and road elements that form connections between them. They additionally contain parameters to determine a time of travel, and parameters to provide guidance to a user of the navigation client (turn information, lane instructions for complex junctions, and so on).

An SD map may support the functionality of a navigation application e.g. to support route planning functionality.

A "High Definition" digital map generally describes a road network in a manner that supports providing motion planning for a vehicle. This may support an autonomous Driving System. Such systems rely on the HD map information for localization (finding a position on the map) and controlling vehicle motion both laterally and longitudinally. The HD map describes the road network in terms of driveable surfaces (lanes and lane boundaries) and fixed objects to aid in determining a detailed location of the vehicle.

High definition maps provide a HD map based application for providing motion planning for a vehicle with information regarding the positioning of observable objects. The HD map based application typically uses this information to determine its location, i.e. the location of the device running the HD map based software application, relative to the map with high accuracy (in the range of 5-10 centimeter). Instead, an SD map based application uses GPS coordinates to determine its position, i.e. the position of the device running the SD map based software application respect to a digital map, using a "map matching" process that finds the location on a road segment of the SD digital map which most closely matches the determined GPS location. As the HD map based application has a different localisation method, it generally does not support a SD map based application style map matching functionality.

Typically SD maps are 2D models of geospatial reality, which may support vehicle navigation and may additionally support lower levels of driving automation e.g. L1 to L2 driving automation. HD maps are accurate 3D models of geospatial reality which may support higher levels of driving automation e.g. L2 to L5 driving automation, and are also useful for vehicle navigation. SD, HD, (and also Live maps which reflect dynamic features) differ not only in data model, capturing rules, accuracy, and feature coverage, but typically also differ in geographical coverage.

The SD and HD map data models specify a collection of geospatial features, feature attributes, and feature associations. The features, attributes, and associations of the map data model are used for creating specific models of reality. However, the map data model may allow reality features to be modelled in several ways. Capturing rules define capturing conditions and they constrain the range of modelling options. Thus, capturing rules contribute to modelling uniformity that applications can rely on.

A vehicle system will often include both HD and SD map based applications, which operate respectively on HD and SD type map data, and provide functionality of differing types e.g. autonomous vehicle guidance (HD) or map matching/route determination (SD). There is often a need for HD and SD map based applications to be able to exchange information with one another. For example, an HD map based application which provides motion planning functionality may require knowledge of a route determined by an SD map based application. However, the HD map based application requires HD map type data in order to provide its functionality. Thus, there is a need to be able to determine a location of interest with respect to a map of one of these map types with respect to a map of the other type.

As stated above, SD and HD digital maps are based on different data models. An SD map is designed to be optimized in relation to finding a destination and determining a route. On the other hand, an HD digital map is designed to be optimized in relation to finding the driveable surfaces around the expected path of the vehicle. The Applicant has realized that the differences between the data models used in HD and SD maps makes it difficult to convert an HD map into the lower resolution description of an SD map and hence to convert a location with respect to one of the map types to a location with respect to the other of the map types. It is difficult to determine corresponding data objects between SD and HD maps covering the same portion of a road network.

Various techniques exist to provide map independent location information for points of interest, and thus enable features to be more easily determined with respect to different digital maps. For example, map agnostic position referencing systems e.g. OpenLR or Agora-C are known. These systems provide a way to describe locations, road elements or routes of a road network in a map independent way. These systems typically comprise rules for encoding and decoding of the map independent information of locations, road elements or routes. The decoding rules describe how to process the map independent information to determine the corresponding elements in the digital map of the decoder. However, such map independent information exchange mechanisms do not provide the ability to convert locations between digital maps of such different type as HD and SD maps. For example, such mechanisms are based upon map matching, which may not be supported by HD map based applications.

As a result it is difficult for the SD and HD map based applications to effectively and reliably exchange information with one another in the same vehicle. As the HD map based application would benefit from information determined by the SD map based application, and the SD map based application could provide better service with access to information determined by the HD map based application, enabling the efficient exchange of information between HD map and SD map based applications is important.

The present invention overcomes this problem, and facilitates exchange of information between SD and HD map based applications using SD and HD maps covering the same portion of a road network. This is achieved by providing map linkage data which may be used by a correspondence module to determine, for location data in respect of one of the HD and SD maps, corresponding location data in the other of the HD and SD maps.

Before going on to describe embodiments of the invention in more detail, the similarities and differences between HD and SD maps will be discussed.

### Map data models

SD and HD maps each comprise a graph representation of a road network. The graph contains arcs and nodes. Arcs have associated attributes and are connected by means of nodes. Nodes that connect 1, 3, or more arcs ("non-bivalent nodes") are significant for describing the road network topology and are referred to as "topology nodes". Bivalent nodes at which a change in lane topography occurs may also be considered herein to be topology nodes. Such nodes may be referred to as a "lane node". Topological nodes therefore do not include certain bivalent nodes, which are not of topological significance, and which may be added to a map to address specific application or map provider requirements. The road network can be represented by an undirected graph or a directed graph. In a directed graph road network representation, the arc direction represents the direction of traffic flow while in an undirected graph representation, the direction of traffic flow is represented by means of a specific arc attribute. The invention is illustrated by reference to the example in which the SD and HD maps are each directed graphs.

### Standard Definition Maps

A standard Definition map (SD map) is a digital map describing a road network and that is typically used for navigation. The SD map is a graph containing arcs and nodes representing road elements of the road network and the connections therebetween. The arcs of the SD map may also be referred to as road segments of the map. Nodes have an associated point geometry. Arcs have an associated road trajectory line often referred to as road centerline. Road centerlines have an associated line geometry.

The SD arcs also have attributes describing for example a maximum speed level, a Functional Road Class (FRC) value, a Form of Way indicator, a trajectory line, a length, or basic lane information.

The SD data model includes a basic lane model. Lane information is however not captured everywhere. An SD arc may therefore have associated lane information which includes the number of lanes, lane types, lane connectivity, and possibly lane associated speed restrictions that may be vehicle type and validity period dependent. The lane information does not include lane specific line geometries. Road centerline geometry is typically used as an approximation of the (virtual) lane centerline geometry. Thus the SD map includes road geometry data e.g. a road trajectory, such as a centreline, but does not include individual lane level geometry data i.e. a lane trajectory or centreline. Such lane information may be present only in respect of certain arcs of the SD map. Such arcs often represent road elements for which corresponding HD map data is available.

### High Definition Maps

The arcs and nodes of the HD map are indicative of road areas and connections between the road areas, respectively. Two types of road areas are distinguished, i.e. non-junction road areas and junction road areas. The HD map includes road arcs indicative of non-junction road areas and junction arcs indicative of junction road areas. Both non- junction and junction road areas include a group of one or more lanes. In the case of junction road areas, the lanes are referred to as "junction lanes" and represent paths which may be taken through the junction. For any type of road area, the lanes may or may not be predefined, marked lanes, and typically are not for junction lanes. Nodes have an associated point geometry.

Road arcs have an associated road trajectory line often referred to as a road centerline. Road centerlines have a line geometry. Junction arcs have no associated centreline line or line geometry. The lanes within the lane groups represented by the road arcs are associated with lane trajectory lines as described in more detail below. The road arcs are representative of such lane trajectory lines.

Junction areas include junction lane trajectory lines indicative of paths which may be taken through the junction. Junction arcs are thus indicative of such junction lane trajectory lines. The arcs (whether junction or road arcs) typically have a type attribute while road arcs have several other attributes including (road trajectory line) length, Functional Road Class (FRC), and Form of Way (FOW). Nodes may have a type attribute such as "bivalent", "bifurcation", "convergence", or "junction".

The HD data model includes a detailed lane model. Lane information is captured for all HD map covered roads. Road arcs have an associated group of one or more lanes. Each lane has a lane trajectory line often referred to as lane centerline. Junction arcs have an associated set of one or more junction lane trajectory lines and may therefore also be considered to have an associated group of one or more junction lanes. Lane trajectory lines and junction lane trajectory lines have an associated line geometry.

Lanes have several attributes including (lane) type, (lane trajectory line) length and (lane) width. Lanes may also have associated speed restrictions that may be vehicle type and validity period dependent. Junction lane trajectory lines may have an associated length attribute.

Thus, in contrast to an SD type map, it will be seen that the HD type map includes lane geometry data, and not merely road geometry data.

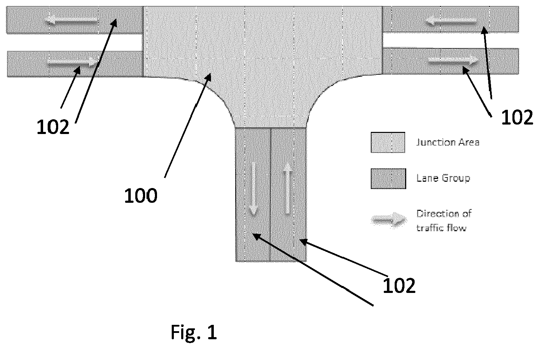

Figure 1 illustrates schematically the features of a road network in the region of a junction relevant to the HD map model. The road network includes a junction area 100, and non-junction road areas 102. Each non-junction road area is indicative of a group of one or more lanes, and a direction of traffic flow is indicated by the arrow.

In contrast with the SD map, the HD map provides a model for road areas and road trajectories. An example of a junction and the associated road trajectories is shown in Figure 1.

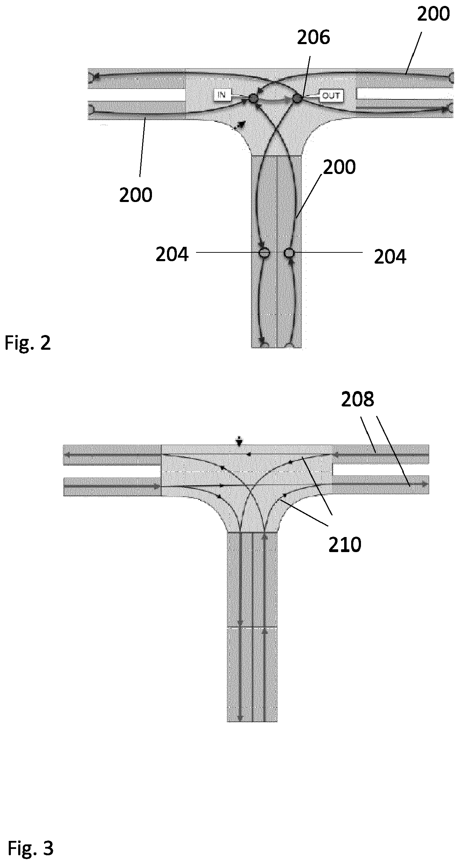

Figure 2 illustrates the region of the road network including the region shown in Figure 1 illustrating in more detail the features relevant to the HD map model.

In addition to the junction area 100 and road areas 202, the model includes road arcs 200, junction arcs 202, bivalent nodes 204 and junction nodes 206.

Figure 3 illustrates the features of the HD map model used to represent the junction. The map includes lane trajectory lines 208 associated with the road arcs representing non-junction road areas, and junction lane trajectory lines 210 associated with the junction arcs representing junction areas.

It will be seen that SD maps and HD maps differ in data model, capturing rules, accuracy, feature coverage, and geographical coverage. Differences in the data model and capturing rules used cause differences in the representation of the road network in the SD map and HD map, respectively.

For example, a road area of the road network represented by a single arc in the SD map may be longitudinally associated with one or more arcs in the HD map or vice versa.

A lane area of the road network represented by a single arc in the SD map may be longitudinally associated with one or more arcs in the HD map or vice versa.

A road area that is associated with one or more arcs in the SD map may be laterally associated with one or more arcs in the HD map and vice versa.

Road areas or lane areas not covered by the SD map may be covered by the HD map or vice versa.

### Map linkage data

The invention provides a map linkage data product which provides correspondence information indicative of a correspondence between portions of a first digital map and a second digital map. The first and second digital maps are independent, different maps. The map linkage data product will be described by reference to the example in which the first and second digital maps are SD and HD type maps respectively, although it will be appreciated that the same principles may be applied to obtaining a map linkage data product providing a correspondence between other types of map, or between different maps of the same type (e.g. produced by different map producers).

As outlined above, finding a correspondence between SD and HD maps may not be a straightforward task, in part due to the difference in the level of lane level detail provided by these map types. There may not necessarily be a straightforward correspondence between arcs of the two maps, or indeed corresponding coverage.

The map linkage data of the present invention is generated in respect of specific first and second digital maps i.e. specific SD and HD maps. Once generated, the map linkage data will enable (map-matched) location data with respect to one of the maps to be input into a correspondence module using the map linkage data in order to obtain corresponding (map-matched) location data in the other one of the maps (or an indication that no corresponding locations exist).

The map linkage data includes data indicative of a plurality of arc sections of the first digital map, and for each arc section of the first digital map, an indication of a corresponding arc section of the second digital map, and vice versa. An arc section as used herein refers to a longitudinal section of an arc. The map linkage system therefore provides a one to one correspondence between arc sections of the first and second digital maps. This enables, for a starting arc section in either one of the first or second (e.g. SD and HD) digital maps, a corresponding arc section in the other one of the maps to be obtained.

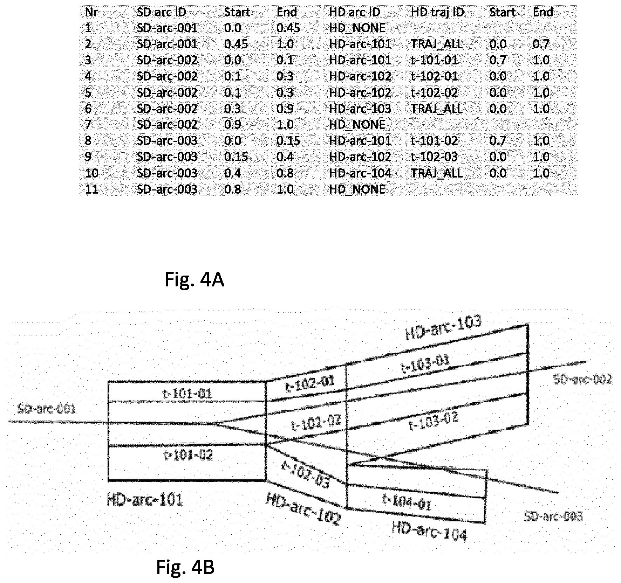

One exemplary embodiment of a map linkage system in the form of a map linkage table is shown in Figure 4A. It will be seen that each row of the linkage table describes the correspondence between a longitudinal section of an arc of the SD map, and a longitudinal section of an arc of the HD map. The table includes a list of SD arc sections (column 1), defined by the relevant SD arc ID (column 2) and defined start and end points along that arc (columns 3 and 4). The start and end points may be defined in terms of an offset from the start node of the arc in the direction of the arc, for example in terms of a percentage of the length of the arc, or an absolute distance value. In each row, a corresponding HD arc section is provided for each identified SD arc section. The HD arc section is identified in a similar manner i.e. an HD arc ID (column 5), and a start and end point along the HD arc (columns 7 and 8). The SD and HD arc identifiers may be any suitable arc reference or identifier.

It will be appreciated that the form of the linkage data is not significant, provided that it enables the corresponding arc sections in the SD and HD maps to be identified. The linkage table may be provided by any suitable data structure.

The linkage data shown in Figure 4A additionally includes lane level data. In column 6, an indication of those HD lane trajectory lines for which the correspondence applies is provided. Thus, each arc section (of either of the HD or SD maps) may be not only a longitudinal section of the arc, but also a lateral portion thereof. Any suitable data, such as, for the HD arcs, an indication of a subset of the lane trajectory lines defining the lateral arc section, or, for SD arcs, an indication of a subset of a plurality of lane numbers associated with the arc, may be used to define the lateral portion of the arc corresponding to the arc section. Any suitable lane reference or lane range data may be used to identify the lateral portion.

For example, according to row 3 of the table shown in Figure 4A, the SD arc section defined between positions 0.0 and 1.0 along arc ID 002 corresponds to trajectory t-101-01 of JD arc 101 between positions 0,7 and 1.0 along the length of that trajectory.

In the table shown in Figure 4A;
- NONE - means no corresponding arc exists (either SD or HD)
- ALL - means all HD trajectory lines are corresponding to the SD arc (used to reduce repetitions)

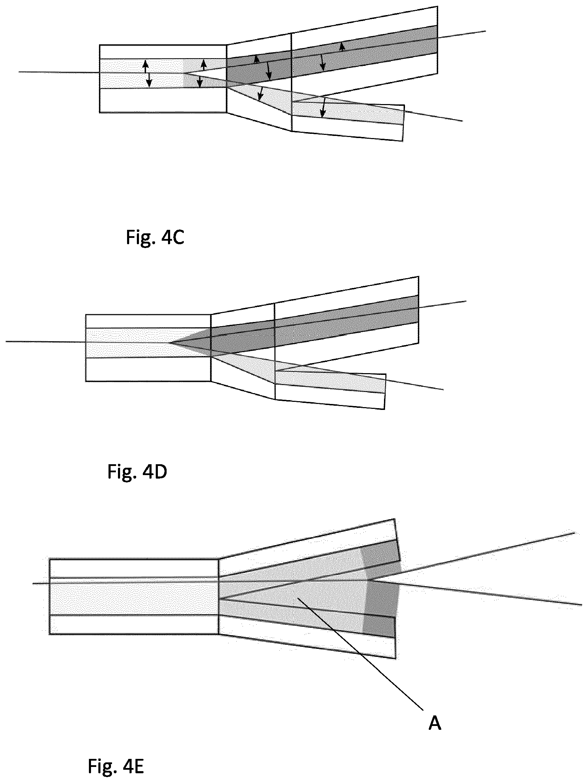

Figure 4B illustrates graphically the linkage between arc sections of the SD and HD maps as reflected in the table of Figure 4A. The corresponding arc section of the HD map may be a lateral subset of lane trajectories associated with a longitudinal arc section thereof. Figure 4C illustrates, using shaded areas, the regions corresponding to those ranges where a correspondence between an arc section of the SD map and an arc section of the HD map (which may be both a lateral and longitudinal section of an arc thereof) applies. Arrows point to the corresponding entities.

It is preferred that when identifying corresponding entities, and the range over which the correspondence applies i.e. the lateral range either side of an SD arc section where it is considered to apply to a particular lateral and longitudinal HD arc section, a geometrical projection (perpendicular) is used, rather than a topological projection. Such a projection is shown in Figure 4C.

Figure 4D illustrates an alternative linkage based on topological projection. As Figure 4E shows, in some situations, the use of a geometrical projection may result in a less "natural" linkage, with an SD arc being linked to separate HD lane groups (area marked "A" in Figure 4E).

For completeness, in some embodiments, each SD arc should be linked with all corresponding HD trajectories, or marked as not linked (rather than simply being omitted from the table). Each trajectory of an HD lane group may be linked with all corresponding SD arcs (or marked as not linked).

For continuity purposes, the linkage information of all parts of an entity (SD arc or HD trajectory) should preferably sum up to the whole range of that entity. In other words, for any portion of an SD arc, or HD trajectory there must be an entry in the linkage table. This will mean that;

There are no gaps in the linkage (a gap is where the next linkage range starts some distance after the previous one ends)

There are no overlaps in the linkage (where the next linkage range starts before the previous one ends).

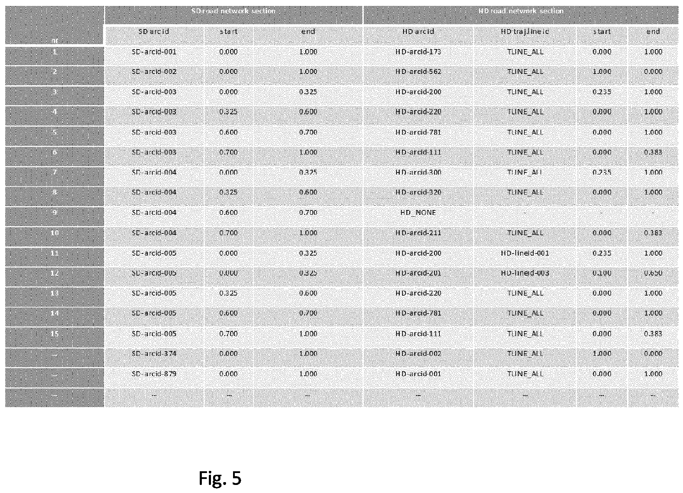

Figure 5 illustrates a further example of a linkage table in accordance with an embodiment of the invention. This is of a similar construction to that of Figure 4A. For example (referring to the rows of the table of Figure 5);
*SD-arcid-001*
   Row 1 of the table represents a one-to-one directional correspondence of an SD arc, i.e. arc SD-arc-id-001, with an HD arc, i.e. arc HD-arcid-173. Note that this example is atypical for HD junction arcs.
*SD-arcid-002*
   Row 2 of the table represents a one-to-one anti-directional correspondence of an SD arc, i.e. arc SD-arc-id-002, with an HD arc, i.e. arc HD-arcid-562. Note that this example is atypical for HD junction arcs.
*SD-arcid-003*
   Rows 3 to 6 of the table represent the correspondence of an SD arc, i.e. arc SD-arc-id-003, with several HD road arcs longitudinally. Laterally, the correspondence is shared among all trajectory lines of the HD arcs. Note that this example is atypical for HD junction arcs.
*SD-arcid-004*
   Rows 7 to 10 of the table represent the correspondence of an SD arc, i.e. arc SD-arc-id-004, with several HD arcs. Only a portion of the SD arc (longitudinally) has corresponding HD arc sections.
*SD-arcid-005*
   Rows 11 to 15 of the table represent the correspondence of an SD arc, i.e. arc SD-arc-id-005, with several HD road arcs. The first section of the SD arc corresponds (laterally) with two different HD arcs, i.e. HD arcs with id HD-arcid-200 and HD-arcid-201.

Figures 4A and 5 illustrate map linkage tables which may be considered to be "SD-HD" linkage tables, providing a correspondence between a starting SD arc section in the SD map and an HD arc section. However, it will be appreciated that these tables may equally provide a correspondence in the reverse direction, starting from an HD arc section. Thus, a single linkage table may be used to provide the ability to determine a correspondence between the maps in both directions. However, in other embodiments, it is envisaged that dedicated SD-HD and HD-SD map linkage tables may be provided.

Figure 5 is reproduced here;

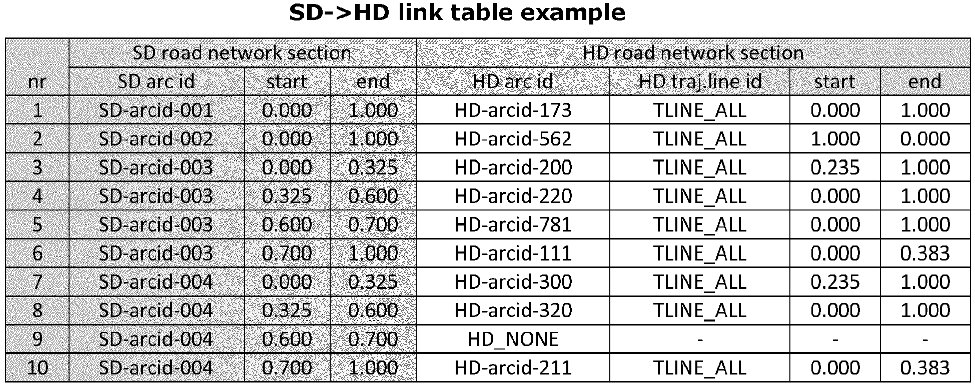

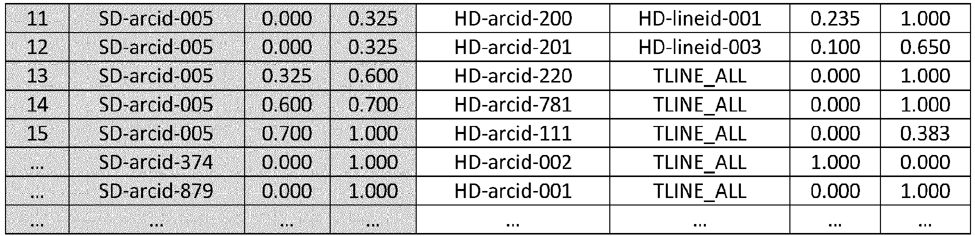

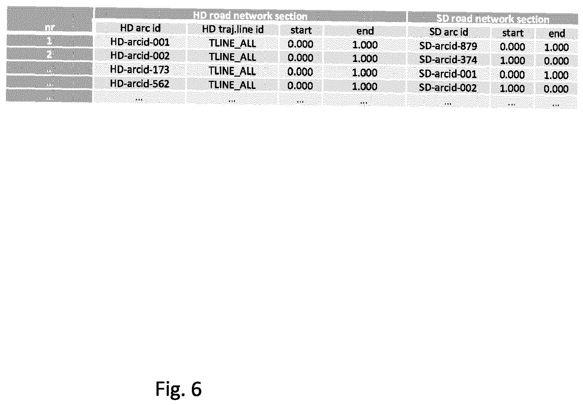

Figure 6 is an example of an exemplary HD-SD linkage table for the same maps as the table shown in Figure 5. Effectively this contains the same data, with different ordering of the columns and sorting order of the rows.

One method for producing map linkage data in accordance with the invention, e.g. a map linkage table in accordance with the embodiments of any of Figures 4-6, will now be described.

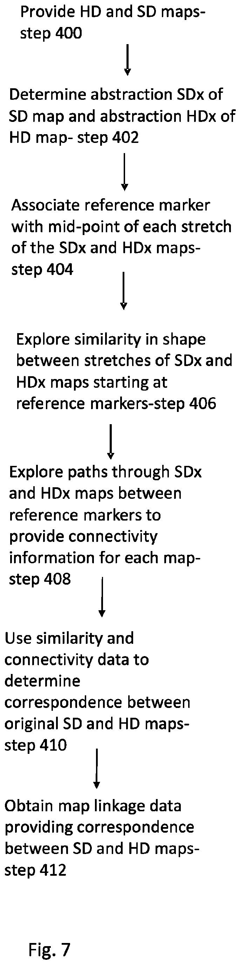

Figure 7 is a flowchart illustrating the basic steps of one method for obtaining a map linkage data product in accordance with the invention using input SD and HD maps. In step 400 the HD and SD maps are provided. In step 402, an abstraction (SDx) of the SD map and an abstraction (HDx) of the HD map are determined. The generation of the abstractions of the SD and HD maps may, of course, be performed in any order, and may be performed sequentially or simultaneously. As used herein, the term "original map" refers to the starting one of the SD or HD maps from which the abstraction is derived, and the term "abstracted map" or abstraction refers to the SDx or HDx map as appropriate obtained from the corresponding original map.

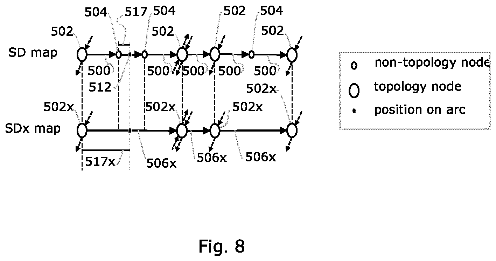

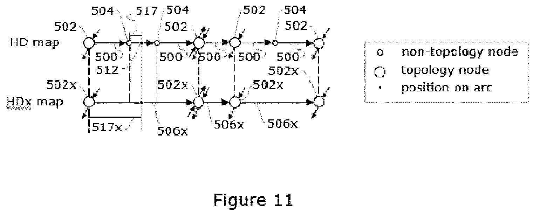

The SDx and HDx maps each include a plurality of stretches connected by nodes. The nodes are a subset of the nodes of the original SD or HD map from which the abstraction is derived. The subset of the nodes corresponds to only the topological nodes of the original map i.e. the non-bivalent nodes and bivalent nodes in the form of lane nodes (at which a change in lane topography, such as a change in lane number, occurs). Each stretch forming part of one of the abstracted maps therefore corresponds to one or more arcs of the original map. For example, where a non-topological bivalent node is present in the original map between two nodes, this node will not be present in the resulting abstracted map, such that the stretch connecting adjacent nodes of the abstracted map will include the (multiple arcs) extending between the nodes in the original map. This is illustrated by Figure 8. The upper part of Figure 8 entitled "SD map" shows a portion of an SD map (the "original map") including arcs 500 connecting nodes. The nodes include topological nodes 502 and non-topological bivalent nodes 504. The lower part of Figure 8, entitled "SDx map" illustrates the abstraction of the portion of the original SD map shown in the upper part of the Figure. The abstraction includes only the topological nodes, 502x. These topological nodes are connected by stretches 506x of the abstracted SD map. The HDx map is provided in a similar manner based on the "original" HD map as illustrated in Figure 11, which is discussed in more detail below.

The abstractions of the SD and HD maps i.e. the SDx and HDx maps, are used to obtain the map linkage data. It has been found that by first determining abstractions of the maps including only the topological features thereof, obtaining a correspondence between the SD and HD maps is facilitated. This is because the SDx and HDx maps include only the more relevant, topological data. Determining the correspondence between the SDx and HDx maps, and hence between the SD and HD maps may be performed in various manners.

It has been found that determining a correspondence between the SDx and HDx maps may advantageously involve comparing the shape of the stretches thereof, to identify stretches of similar shape. The SDx and HDx maps both represent the same road network, and it will therefore be expected that, regardless of the differences in e.g. map capturing rules etc., there will be some similarity in the shape of the stretches of the two abstracted maps where they are representing the same features of the road network. Determining a correspondence between the SDx and HDx maps (and hence the SD and HD maps) by consideration of the stretches i.e. the regions between nodes, rather than by consideration of the maps in the region of the nodes, has been found to facilitate the process of determining a correspondence. This is because, stretches representing the same features of the road network, are unlikely to differ so significantly between the SDx and HDx maps. In contrast, there is likely to be more significant variation in the way the road network is represented by the SDx and HDx maps in the region of nodes as a result of topological differences between the maps.

Rather than attempting to find a correspondence e.g. match between topology nodes of the SDx and HDx maps, instead the method attempts to find a match between stretches of the maps, and is thus more resistant to topological differences between the maps. It simply relies upon there being a road in the same place on both the HD and SD maps.

Returning to Figure 7, in step 404, a reference marker (which may also be referred to as a "stitch point"), is associated with the mid-point of each stretch of each of the SDx and HDx maps. By definition, these markers, located at the middle of the stretches, are located at the furthest point from the topology nodes of the abstracted maps. In step 406, the similarity in shape between the stretches of the abstracted SDx and HDx maps is explored starting from these reference points. For example, the method may involve an algorithm selecting a given stretch of one of the HDx and SDx maps, and then iteratively comparing the shape to the shape of each of the stretches of the other one of the HDx and SDx maps, by crawling along the stretches starting at the mid-point reference markers and comparing by shape. This process may be repeated for all stretches of the one of the HDx and SDx maps. Of course, any suitable method may be used which attempts to find stretches of corresponding shape between the SDx and HDx maps.

Any suitable rule(s) may be used to compare the shape between stretches of the abstracted maps. For example, the method may involve taking into account the shape of the centerline of each stretch in combination with its location and orientation. Suitable techniques for analysing the spatial embedding of a road segment are known in the art of comparing street maps. In some embodiments the similarity in shape between stretches may be performed by reference to a Frechet distance between the stretches.

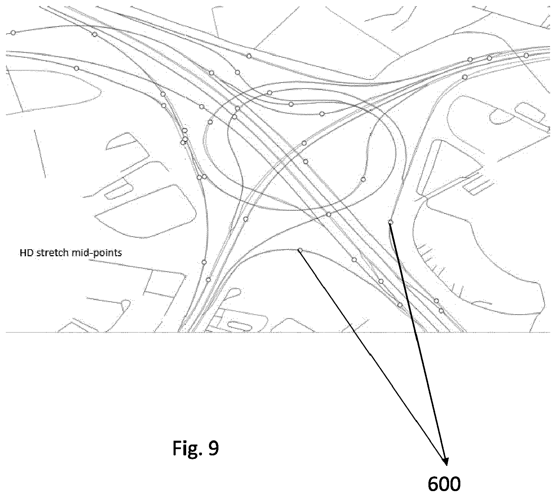

Figure 9 illustrates stretches of an HDx map, with the corresponding reference markers 600 at the midpoints thereof.

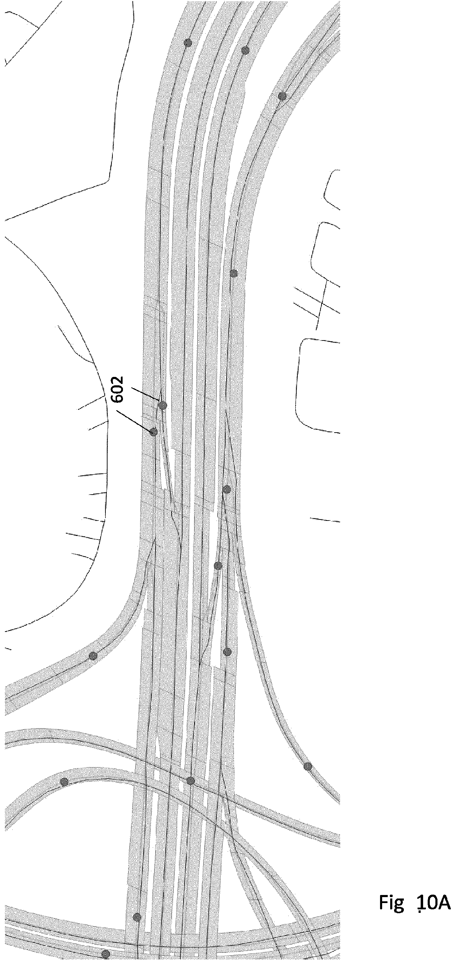

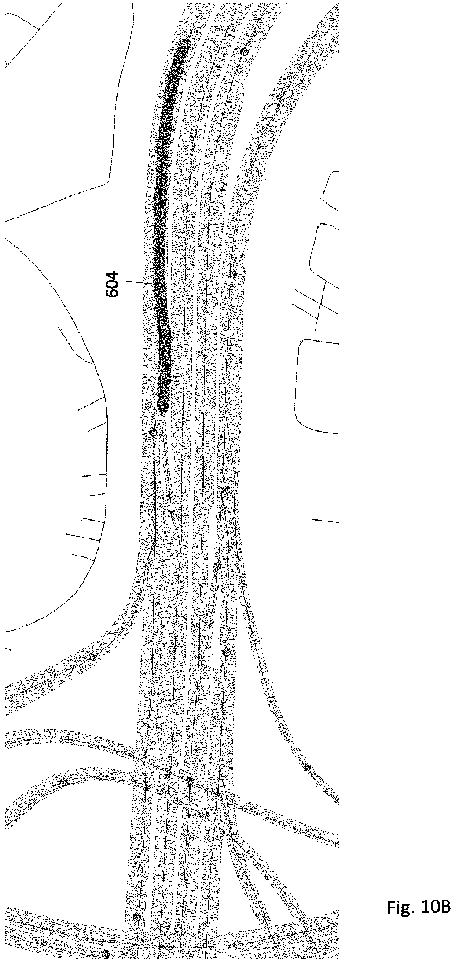

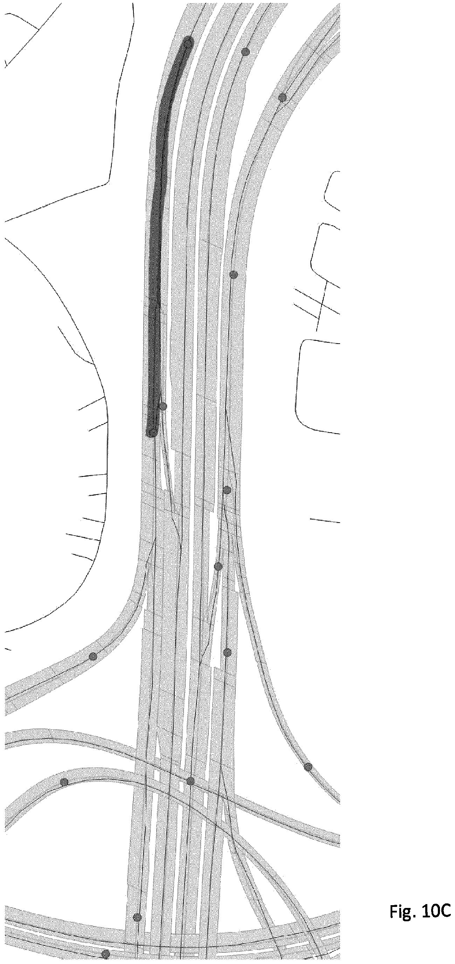

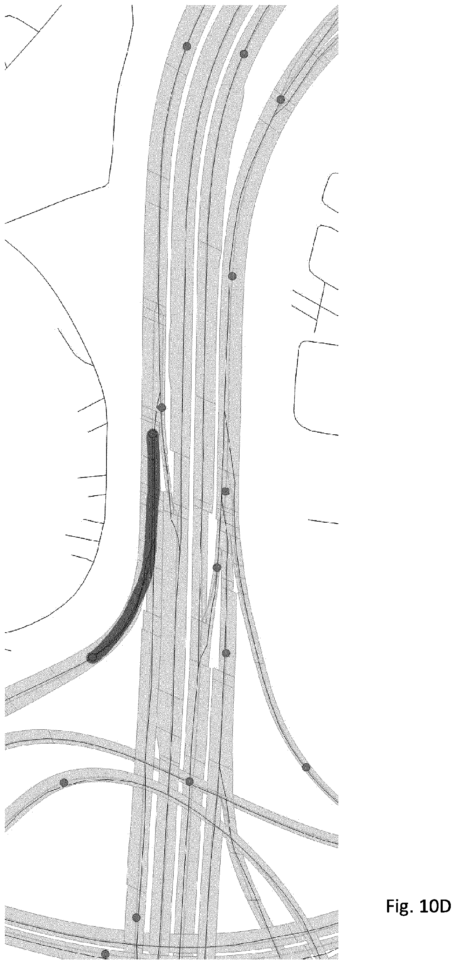

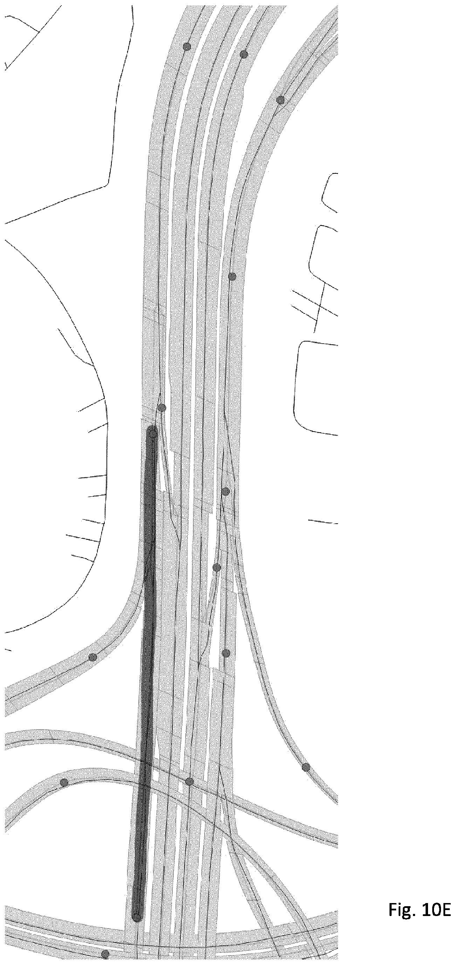

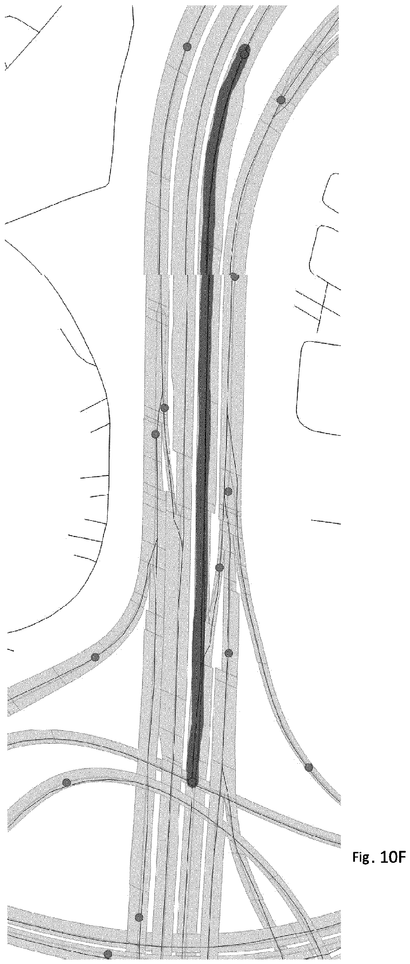

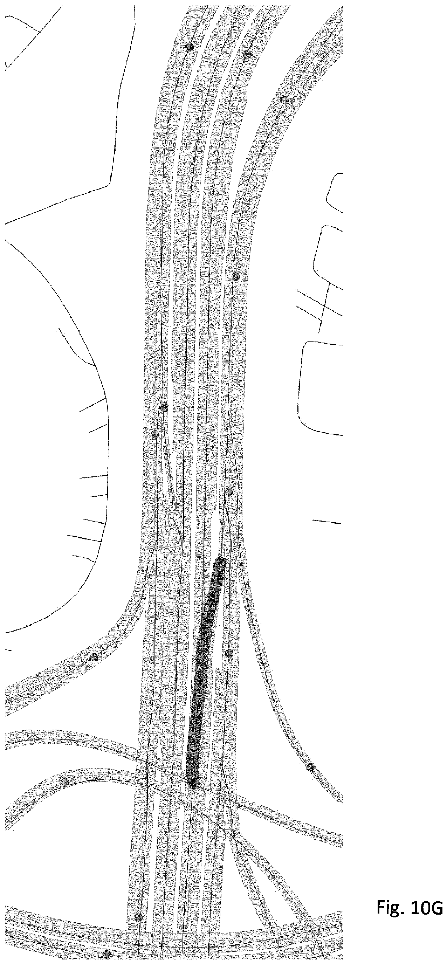

As the process of comparing the SDx and HDx maps involves comparison between the stretches, rather than nodes thereof, in step 408 of Figure 7, the method of determining the map linkage data further comprises exploring paths through each of the SDx and HDx maps between the reference markers associated with the mid-points of the stretches. This provides connectivity information for each abstracted map. Some examples of such paths are shown in Figures 10A-G. Figure 10A illustrates the stretches and associated reference marker points 602 for a portion of an HDx map, while Figures 10B-G illustrate some of the exemplary paths (dark shading indicated 604 in Figure 10B) between those reference marker points. The step of exploring paths may involve generating a route between the marker points using any appropriate routing algorithm.

Of course, while in the embodiment described, reference marker points associated with the mid-points of stretches are used to assess both the similarity in shape of stretches and connectivity of the abstracted maps, this need not be the case. For example, the reference marker points need not be located exactly at the mid-points of the stretches and/or difference reference marker points could be used when assessing similarity of shape of stretches and connectivity of the maps.

One suitable rule for exploring paths may compare the stretches around a topology node. An incoming stretch and an outgoing stretch may be used to select a start location (e.g. corresponding to a reference marker point) on the incoming stretch (prior to the topology node) and a destination location (e.g. corresponding to a reference marker point) on the outgoing stretch (after the topology node). The route from the start location to destination location then is used to determine correspondence between the two maps around the topology node.
This rule is better suited to determine correspondences between the beginning part and the ending part of the stretch.

In a further example, a rule may involve selecting a sequence of connected stretches, defining a start location of a first stretch of the sequence and a destination location on the last stretch of the sequence (which may correspond to reference markers associated with the stretches) and determining the map correspondence based on a route between the start location and the destination location along the sequence of stretches. This rule resembles conventional map matching algorithms.

In step 410 of Figure 7, the similarity data obtained in step 406, and the connectivity data for each abstracted map obtained in step 408 is used to determine a correspondence between the original SD and HD maps. In step 412, this correspondence data is used to obtain map linkage data providing a correspondence between the SD and HD maps. For example, this may be in the form of one or more map linkage tables, such as those described by reference to Figures 4A, 5 and 6. A single table may be obtained, or separate SD-HD, and HD-SD tables, as previously described.

A set of rules may be used to determine the correspondence between the SD and HD maps in step 410. The most appropriate rules may vary, for example depending upon the particular SD and HD maps involved. Exemplary rules are described above. It will be appreciated that steps 406, 408 and 410 need not be distinct steps, and may occur at least partially contemporaneously.

The range of linkage between SD and HD arc sections may be obtained using a suitable projection, such as a geometrical projection, as described by reference to Figures 4B-E.

Some further details of the SDx and HDx maps will now be described, by way of example only. The SDx and HDx maps will include information from the original map from which it is derived (e.g. node references, stretch (arc) references, lane data, road centreline shape etc.)

### SDx map

The SDx part will now be described in more detail. The SDx map part represents a specific graph representation of the road network. The graph consists of arcs and nodes.

The SDx map is derived from the SD map but includes only the topology nodes thereof. Topology nodes include non-bivalent nodes i.e. nodes to which 1 or 3 or more arcs are connected, and lane nodes. Lane nodes are bivalent nodes at which there is a change in lane topography e.g. the incoming and outgoing arcs are associated with different numbers of lanes, and are thus indicative of road areas of the road network with different numbers of lanes. Bivalent nodes at which no change in the number of lanes associated with incoming and outgoing arcs occurs are omitted from the SDx map. Such nodes are not considered significant to the topology (whether at road or lane level) of the network. The number of lanes is constant along SDx stretches. The SDx stretches may be referred to as "arcs" of the SDx map, but for clarity herein, are referred to usually as "stretches", with "arcs" referring to the arcs of the original map.

The abstraction of the SDx map may be obtained from the SD map by removing certain content thereof.

In the SDx map, SDx nodes are associated with SD topology nodes while SDx stretches are associated with one or more SD arcs, i.e. the set of SD arcs between two consecutive SD topology nodes.

The SDx graph is a directed graph in which the arc direction represents the direction of traffic flow. Both SDx nodes and SDx stretches may have a small set of associated attributes.

The following gives some further information describing one exemplary form of the SDx map data. Other forms may of course be used.

### SDx node attributes

SDx nodes have a geometric identification attribute, a set of references to outgoing arcs, and a set of references to incoming stretches. The geometric identification attribute consists of a 2D point geometry (i.e. longitude and latitude) and a z-level. The geometric identification of SDx nodes is equal to the 2D point geometry and z-level of corresponding SD topology/lane nodes and is thereby globally unique.

### SDx stretch attributes

SDx stretches have four attributes, i.e. a head node reference, a tail node reference, the head angle, and the tail angle.

The positions of SDx nodes are used to uniquely refer to the SDx nodes. The head and tail angle are the angles of the stretch's associated road trajectory line at the head and tail of the stretch, respectively. This road trajectory line information is present in both the SD map and the SDx part of the map linkage system.

The head angle of an SDx stretch corresponds with the head angle of the corresponding SD arc that is connected to a corresponding SD topology/lane head node. Likewise, the tail angle of an SDx stretch corresponds with the tail angle of the corresponding SD arc that is connected to a corresponding SD topology/lane tail node.

Head angles are locally, i.e. at a single node, unique. Likewise, tail angles are locally, i.e. at a single node, unique. Note that road trajectory line geometry and angles are in 2D, i.e. in the horizontal plane.

### SD to SDx cross referencing

For any point position of interest with respect to the SD map i.e. a position on an SD arc, it is possible to determine a position with respect to the SDx map.

Positions on the road network of the SD map are referred to by their arc reference, a possible lane reference, and an offset from the head of the arc's road trajectory line measured along this trajectory line. An arc can be uniquely referred to by the combination of head or tail node reference and head or tail angle. A lane can be referred to by a number in accordance with an appropriate lane numbering scheme. Lanes are typically numbered from 1 to L starting with the rightmost lane on righthand traffic roads and starting with the leftmost lane on left-hand traffic roads.

Positions on the road network of the SDx map can be referred to in the same way as for positions on the road network of the SD map. Only the topology nodes of the SD map are however present in the SDx map. Note that the number of lanes is constant along SDx stretchess. As opposed to the SD map, lanes are referred to in relative terms, i.e. the 'leftmost lane', the 'n leftmost lanes', the 'nth lane from the left', the rightmost lane', the 'n rightmost lanes', and the 'nth lane from the right'. Relative lane referencing allows lanes to be referred to irrespective of the presence of lane information in the SD map.

An SDx map position reference can be derived from its corresponding SD map position reference by determining its corresponding SDx topology/lane head node and its offset from the road trajectory line head of the associated SDx stretch connected to this topology/lane node. This can be realized by traversing the road network graph in the SD map backwards from the position of interest until an SD topology/lane node is found. While traversing, the offset on the SDx stretch, i.e. the SDx offset, is calculated by adding the lengths of the visited SD arcs to the known offset on the SD arc, i.e. the SD offset.

This process is illustrated in Figure 8. Referring to the SD map, a position 512 on the arc of interest has a given offset 517 from the closest preceding node i.e. the head node for the arc, which is a bi-valent node. However, the bivalent node is not a lane/topology node and is therefore not present in the SDx map. In order to determine the offset from a node of the SDx map, it is necessary to traverse the SD map further back until a lane/topology node is reached i.e. until the first node which is also present in the SDx map is reached. The offset 517x of the position 512 in the SDx map may be expressed as an offset with respect to this lane/topology node. The offset 517x is the sum of the offset 517 of the position 512 in the SD map from the immediately preceding non topology/lane node 504 and the lengths of the preceding arcs in the SD map lying between that node and the nearest topology/lane node 502 which is also present in the SDx map. The length of an SD arc equals the length of the associated road trajectory line.

In exemplary embodiments the SDx map does not contain road trajectory lines as such. Its road trajectory lines comprise a reference to a concatenation of relevant parts of associated road trajectory lines present in the SD map. However, in alternative arrangements, the SDx map could include such information.

### HDx map

Figure 11 is a Figure similar to Figure 8 but showing the relationship of the HD and HDx maps.

The HDx map is derived from the HD map in a manner similar to that described in relation to the SDx map and its relationship to the SD map. The HDx map includes only some of the content of the HD map. It includes only the topology nodes 502 of the HD map. The number of lanes is constant along HDx road stretches.

The HDx part of the gateway map represents a specific graph representation of the road network. The graph consists of stretches (arcs) 506x and nodes 502x. HDx nodes are associated with HD topology nodes 502 while HDx arcs 506x are associated with one or more HD arcs, i.e. the set of HD arcs between two consecutive HD topology nodes.

The HDx graph is a directed graph in which the stretch direction represents the direction of traffic flow.

Both HDx nodes and HDx stretches may have a small set of associated attributes. Some exemplary forms of the HDx and HD map data will now be described by way of example only and not limitation. Other forms of the HD and HDx map data may be used.

### HDx node attributes

HDx nodes have a geometric identification attribute, a set of references to outgoing stretches, and a set of references to incoming stretches. The geometric identification attribute consists of a 2D point geometry (i.e. longitude and latitude) and an elevation. The geometric identification attribute of HDx nodes is equal to the 2D point geometry of corresponding HD topology nodes. The elevation is equal to the elevation of the road area (i.e. non junction road area or junction area) at the HD topology node's 2D point geometry.

The elevation is derived from the detailed 3D road area geometry present in the HD map. The geometric identification attribute of HDx nodes is thereby globally unique.

### HDx stretch attributes

HDx arcs have five attributes, i.e. the stretch type, a head node reference, a tail node reference, the head angle, and the tail angle.

There are two types of HD arcs and HDx stretches (arcs), i.e. road arcs/stretches and junction arcs/stretches. Road arcs/stretches are representative of a non junction road area comprising a group of one or more lanes while junction arcs/stretches are representative of a junction area. The HDx stretch type attribute has two possible values, i.e. 'road stretch' and 'junction stretch'. The type of an HDx road stretch corresponds with the type of the corresponding HD arc(s). As with the SD and SDx maps, the arcs of the HDx map will be referred to here primarily as "stretches" to avoid confusion with the arcs of the original HD map.

The positions of HDx nodes are used to uniquely refer to the HDx nodes. The head and tail angle are the angles of the stretch's associated road trajectory line at the head and tail of the HD road arc, respectively. This road trajectory line information is present in the HD map. In addition to the road trajectory line, HD road arcs have an associated set of lane trajectory lines. HD junction arcs have no associated road trajectory line but have an associated set of junction lane trajectory lines.

The head angle of an HDx road stretch corresponds with the head angle of the corresponding HD road arc that is connected to a corresponding topology/lane head node. Likewise, the tail angle of an HDx road stretch corresponds with the tail angle of the corresponding HD road arc that is connected to a corresponding HD topology/lane tail node.

Head angles are locally, i.e. at a single node, unique. Likewise, tail angles are locally, i.e. at a single node, unique. Note that road trajectory line geometry and angles are in 2D, i.e. in the horizontal plane.

### HD to HDx cross referencing

Positions on the road network of the HD map are referred to by their arc reference, a possible lane (trajectory line) reference (for road arcs) or junction lane trajectory line reference (for junction arcs), and an offset from the head of the trajectory line measured along this trajectory line.

Figure 11 illustrates the approximate correspondence between HD and HDx position references.

A road arc can be uniquely referred to by the combination of head or tail node reference and head or tail angle. A junction arc can be uniquely referred to simply by the combination of head node reference and tail node reference.

A lane (trajectory line) can be referred to in absolute terms, i.e. by a number in accordance with an appropriate lane numbering scheme, or in relative terms, e.g. the nth lane from the right.

A junction trajectory line can be referred to by an identifier in accordance with an appropriate junction trajectory line identification scheme.

HD road arcs have in addition to lane trajectory lines a road trajectory line. Approximate position references use offsets measured along the road trajectory line instead of measured along lane trajectory lines.

HD junction arcs do not have any (overall junction) trajectory line in addition to its junction trajectory lines. The position of a junction arc's head and/or tail node can however be used as approximate position reference for locations on the associated junction area.

Positions on the road network of the HDx map are referred to in a similar way as it is done for positions on the road network of the HD map. Only the topology nodes of the HD map are however present in the HDx map. Note that the number of lanes is constant along HDx road stretches.

An HDx map position reference can be derived from its corresponding HD map position reference in a similar manner to that described in relation to SDx and SD map position referencing in Figure 8.

Referring to Figure 11, a point position of interest 512 in the HD map is described in terms of an offset 517 from a closest preceding node 504 i.e. a head node. If this node is not present in the HDx map, as in the case of Figure 11 because it is a non-lane/topography bivalent node 504, then an offset with respect to the nearest preceding node 502 which is present in the HDx map must be determined. The HD map is traversed backwards from the position of interest 512 until an HD topology node 502 is found (which is also present in the HDx map). An offset 517x is then determined of the position of interest 512 from this HD topology node. This offset is determined by adding the lengths of the HD arcs between this HD topology node and the bivalent (non lane/topography) head node 504 of the arc along which the position of interest lies in the HD map, with respect to which the offset 517 in the HD map is described. The length of an HD arc equals the length of the associated road trajectory line. The length of an HD arc associated lane equals the length of the associated lane trajectory line. The HD offset is measured along the position related lane or junction trajectory line while the rest of the HDx offset, if any, is measured along the road trajectory line.

In exemplary embodiments the HDx map does not contain road, lane, and junction trajectory lines as such. Its road trajectory lines comprise a reference to a concatenation of relevant parts of associated road trajectory lines present in the HD map. Its lane and junction trajectory lines are references to related trajectory lines present in the HD map. However, alternatively, the HDx map could itself include such information.

It has been found that the use of abstractions of the HD and SD maps in obtaining the map linkage data may provide a more accurate and reliable way of determining correspondences between the HD and SD maps. This has been found to reduce the extent to which the map linkage data need be updated if the SD or HD map data is updated. Changes in the road network may require updates of the SD and HD map data to ensure that an accurate representation of reality is maintained. Updates made by SD and HD map production systems may trigger the map linkage data production system to make any necessary related changes to the map linkage data. This may ensure that consistency of the map linkage data is maintained, and the latest version of the SD map is correctly linked to the latest version of the HD map i.e. the latest versions available from the SD and HD map production systems.

Any SD map updates that do not affect SD network topology, road trajectory line lengths, and geometric node and arc identifications do not require updating of the map linkage data. Any HD map updates that do not affect HD network topology, road, lane, and junction trajectory line lengths, and geometric node and arc identifications do not require updates of the map linkage data.

The associations between the nodes and arcs of the SD and SDx and HD and HDx maps respectively are determined based on a geometric identification. For example SDx node identification (and association with a corresponding SD node) may be based on a longitude, latitude, and z-level of the node. HDx node identification (and association with corresponding HD node) may be based on a longitude, latitude, and elevation of the node. Arc identification may be based on the identification of the tail and head nodes for the arcs and the angles by which the road centerline meets the head and tail nodes. Angles are determined in the horizontal plane.

Such geometric identification is independent of any SD and HD map production system specific identification schemes. This eases the application and generation of the map linkage data to various SD and HD map production environments. Furthermore, any renewal of identifiers for nodes or arcs in the SD or HD maps will not require an update to the map linkage data, since it relies on geometric identification of arcs and nodes.

### Map Linkage Data structure

The map linkage data may be generated by a server using the SD and HD map data.

The map linkage data may be delivered as a layer associated with the SD and/or HD map data. The map linkage data may be provided as a single map layer (although other arrangements are of course possible). Where the SD and HD map data is provided by streaming the data from a server to a vehicle system, the map linkage data may be associated with that data, such that effectively the vehicle system is provided with the applicable SD, HD and map linkage data together as part of an applicable map delivery system.

The SD and HD map layers are typically tiled so that tiles may be updated and/or delivered to vehicle systems independently. The map linkage data may similarly be tiled, such that the tiles may be updated and/or delivered to vehicle systems independently. For example, an update of an SD map tile may require the update of the corresponding map linkage data tile (or layer of the tile including the SD map), but not of the HD map tile (or layer of the tile including the SD map) and vice versa.

### Use of map linkage data

One example of the use of a map linkage data product in accordance with the invention will now be described.

In one example the map linkage data may be used to facilitate communication between digital map based applications using HD and SD digital maps respectively.

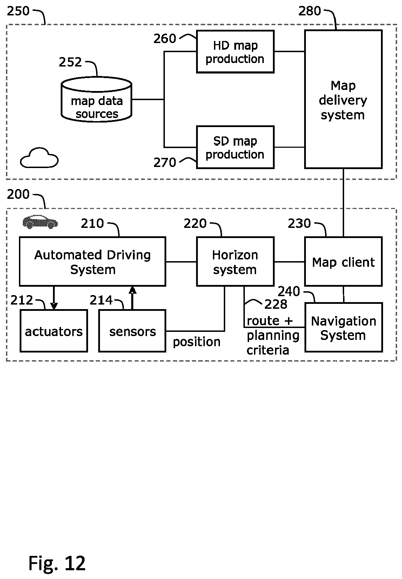

Figure 12 depicts a system overview consisting of a server i.e. cloud side 250 and a vehicle system side 200. The cloud side 250 contains an SD map production system 270 and an HD map production system 260 that operate independently and that provide SD map data and HD map data to a map delivery system 280. One example of such a system is TomTom's Autostream^{™} system. The map delivery system 280 delivers the HD map or the SD map data to a map client 230 at the vehicle system side 200.

The vehicle side 200 of the system includes a first map based application, the navigation system 240, which operates on SD map data. In the exemplary system of Figure 12, the navigation system 240 receives SD map data from the map client 230, but variant implementations may use a navigation system 240 that operates on stored SD map data.

The vehicle side 200 also includes a second map based application, the horizon system 220, which operates on HD map data. The vehicle side 200 also includes an Automated Driving System 210 in communication with the horizon system 220. The automated driving system 210 is in turn in communication with actuators 212 and sensors 214. The sensors 214 may also provide data to the horizon system 220.

A map client 230 is arranged to provide the appropriate form of map data to the first and second map based applications from the map delivery system 280. Rather than being a single map client which operates in this way, the map client 230 may include first and second map clients which are arranged to obtain only one of SD and HD map data from the map delivery system 280 and provide it to the applicable one of the first and second map based applications.

The horizon system 220 provides the Automated Driving System 210 with the HD map data that it operates on. The horizon system 220 typically determines the HD map data that is most likely to be used and places that data in a local storage. The collection of HD map data in the local storage is commonly referred to as the horizon. Thus, the horizon consists of map data covering predicted future locations of the vehicle. The horizon system typically uses a most probable path (MPP) to determine the horizon. The horizon may also cover alternate paths enabling the automated driving system to respond to real-time events (e.g. accidents, evasive manoeuvres, driver intervention).

In order to determine the vehicle horizon, the horizon system 220 typically requires knowledge of a most probable path that is to be travelled from the current location by the vehicle. Where the navigation system 240 has determined a route to be travelled (whether a route generated e.g. using inputs from a human driver of the vehicle, or an inferred route based on past behaviour of a driver, for example), such a route will typically provide the most probable path. It is therefore desirable for the horizon system 220 to have access to such a route. The navigation system 240 may provide a determined route to the horizon system 220 as indicated, optionally along with the planning criteria used in generating the route (which may be based upon inputs of a human driver). However, the navigation system 240 will have determined its route by reference to SD map data, while the horizon system 220 operates on HD map data. It would therefore be useful to be able, for a route determined by the navigation system 240 with respect to SD map data, to determine a corresponding route or route portions with respect to HD map data for input to the horizon system 220.

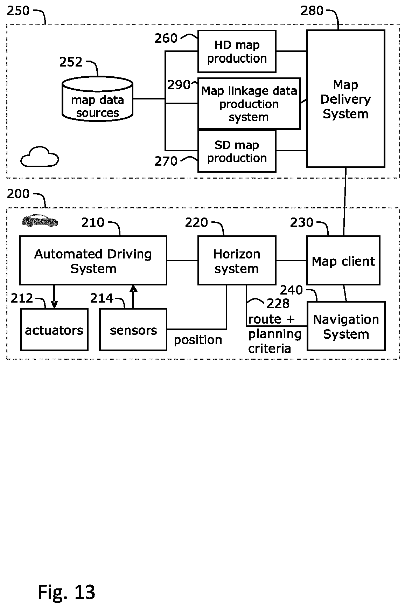

Figure 13 illustrates a modified version of the system overview of Figure 12, illustrating how the map linkage data of the present invention may be used to solve this problem.

The system shown in Figure 13 corresponds to that of Figure 12 but the server/cloud side now also includes a map linkage data production system 290. Typically, the SD map production system 270 and HD map production system 260 operate independently and provide SD map data and HD map data to the map delivery system 280. The map linkage data production system 290 uses HD and SD map data to determine the map linkage data as previously described. The map linkage data production system 290 provides the map linkage data to the map delivery system 280. The map delivery system 280 provides the SD map data, the HD map data and the map linkage data to the map client 230 at the vehicle side 200. For example, this may be done on a tiled basis as previously described, with the map linkage data provided in an additional layer of map which also includes SD and HD map data layers.

The horizon system 220 first determines a position in the HD map that corresponds with the vehicle position received from the sensors (typically a GNSS receiver). It sends the location to the navigation system 240 and receives a navigation route from the navigation system. The horizon system uses the geometry of the route provided by the navigation system to request the associated map data from the map client 230. However, the driving automation system 210 and hence the horizon system 220 operate on HD data. Hence, the horizon system according to the invention converts the navigation route received from the navigation system 240 into a route with respect to the HD map in the manner described below. The converted navigation route may then be used by the horizon system 220 to obtain applicable horizon data for provision to the automated driving system 210.

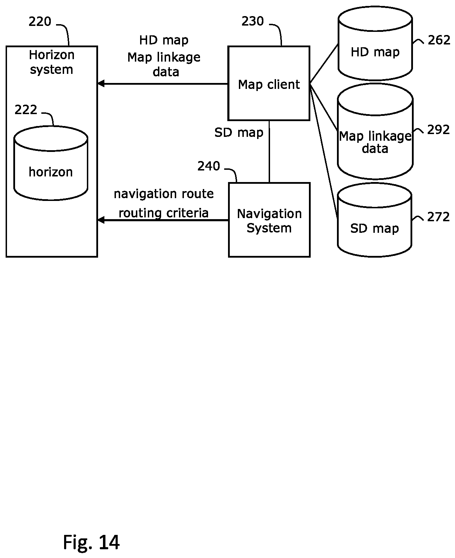

Figure 14 is a map data overview of the system showing the map client 230 that provides the HD map 262 and the map linkage data 292 to the Horizon system 220. The navigation system 240 receives the SD map 272 from the map client 230 and plans a navigation route using the user provided destination and routing criteria (routing preferences of the users). The navigation system 240 provides the navigation route and optionally the routing criteria to the horizon system 220. The horizon system provides the Automated Driving system 210 with the HD map data that it operates on. The horizon system 220 typically determines the HD map data that is most likely to be used and places that data in a local storage 222. The collection of map HD data in the local storage is commonly referred to as the horizon 222. The horizon 222 contains HD map data for predictions of future locations of the vehicle. The future location may be on a predetermined path, but it also may be on alternate paths. The horizon 222 enables the automated driving system to respond to real-time events (e.g. accidents, evasive manoeuvres, driver interventions). The horizon system 220 typically obtains a most probable path (MPP) to retrieve the map data from the map client 230 and adds the retrieved map data to the horizon 222.

As described above, the Horizon system 220 provides the automated driving system 210 with the map data that it uses for implementing its automated driving functions. The horizon system 220 typically uses a most probable path (MPP) to determine the horizon 222. The figure below shows an architecture diagram of the horizon system 220.

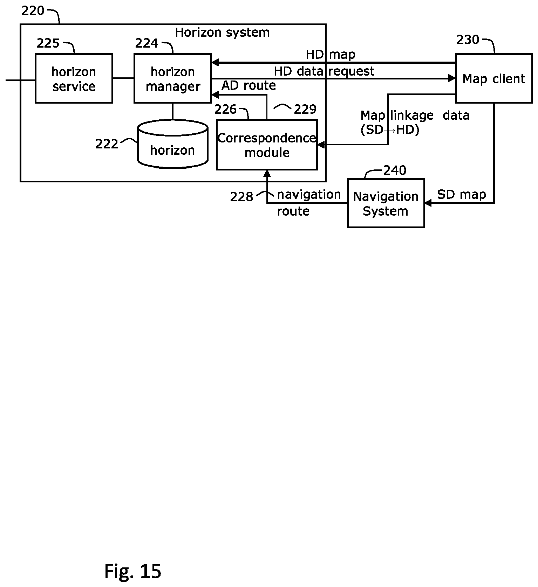

Figure 15 is a schematic representation showing the operation of the Horizon system 220 in more detail. The horizon system 220 includes a correspondence module 226 which receives, as inputs, data indicative of a navigation route 228 with respect to the SD map and the map linkage data and uses this to determine a corresponding HD automated driving route. The correspondence module 226 may then output the HD route to the horizon manager 224 (in the form of the "AD route" as indicated).

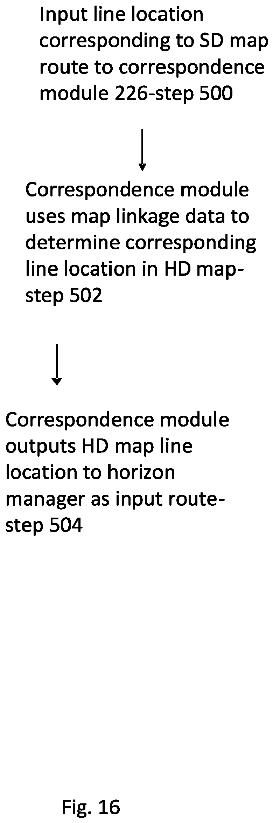

Figure 16 is a flow chart illustrating the steps in the method.

A line location with respect to the SD map is input to the correspondence module 226, corresponding to the route determined by the navigation system 240- step 500.

The correspondence module 226 has access to the map linkage data e.g. map linkage table(s). The correspondence module 226 may obtain this data from a map client as shown, and/or may store the data locally, or may obtain the required data in any suitable manner.

In step 502, uses the map linkage data to determine a line location with respect to the HD map corresponding to the line location with respect to the SD map. As illustrated by the exemplary map linkage tables of Figure 4-6, the map linkage data enables, for an arc section of the SD map, any corresponding arc sections of the HD map to be obtained. Thus the corresponding line location may be determined by identifying the arc sections of the HD map which correspond to arc sections of the SD map along the length of the line location (which may involve identifying the arc sections of the SD map along the line location of the SD map). Offset information with respect to the SD map denoting the start and end of the line location in the SD map may be used to identify the offset of the corresponding HD line location with respect to nodes of the HD map.

In step 504 the correspondence module provides, as output to the horizon manager, data indicative of the resulting line location with respect to the HD map, which correspond to the starting SD route. This data may be considered to provide the AD route.

In this way, the correspondence module 226 operates on the map linkage data 292 to transform the SD map information into equivalent HD map information for use by the horizon system. The horizon manager 224 of the horizon system 220 receives the resulting AD route data 229 and retrieves the referenced HD map data from the map client 230 for storage in the horizon 222. As the navigation route 228 represents the preferred route for the driver/user, including the corresponding HD map data to the horizon improves the horizon by only including the most relevant HD map data.

For ease of reference, the use of the map linkage data has been described with reference to Figure 16 in relation to the case in which a single line location in the HD map is found corresponding to the input SD line location (route). It will be appreciated that corresponding HD arc sections may not exist for all SD arc sections along the route/starting line location. Thus, the result of the conversion of the line location from the SD map to the HD map may be one or more line locations with respect to the HD map. Thus, a plurality of discontinuous corresponding line locations in the HD map may be determined. Any suitable method may be used by the horizon system to infer a continuous route therefrom using techniques appropriate for compensating for incomplete HD map coverage. The output of the correspondence module therefore may be an ordered sequence of line locations with respect to the HD map.

While the above example has been described by reference to the case in which the correspondence module is implemented on the vehicle side, this functionality may alternatively be provided on the cloud/server side, or by a combination of vehicle and server side steps. For example, the horizon system could provide an SD route obtained from the navigation system 240 to the server with a request for it to be converted into an HD route, with the server then using the map linkage system data to obtain the converted HD route and then transmit it back to the horizon system. The map linkage system data need not necessarily be provided to the vehicle/client side of the system.

Of course, while Figure 15 illustrates the map client 230 providing both the HD and SD map data, the SD map data could be provided from a separate map client to the HD map data, as described above. This may be particularly applicable where the SD and HD map data are obtained from different map data providers. In either case, the SD map data may be stored locally such that the navigation system does not need a wireless communication infrastructure for its operation.

It will be appreciated that the map linkage system data is specific to particular HD and SD maps. Thus, the appropriate map linkage system data should be used for the SD and HD maps of interest, i.e. between which the route is to be converted.

In order to avoid having to generate new map linkage system data when the navigation route is generated with respect to an SD map which is different to that to which the map linkage data relates, it is possible to first transform the SD route from the different SD map to that to which the map linkage data relates and then perform the steps outlined above to convert that SD map route to the HD route.

An example of the additional pre-processing steps will be described by reference to Figure 19.

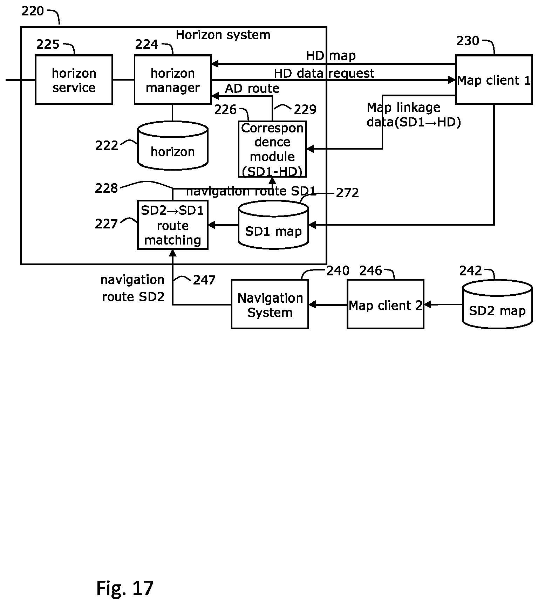

Figure 17 shows a diagram of the horizon system 220 in which a route generated by a navigation system with respect to a first SD map (SD1) is converted to a route with respect to the HD map using map linkage system data which provides a conversion between a different SD map, SD1, and the HD map.

The horizon system 220 contains an SD2→SD1 route matching component 227 that receives the SD1 map data 272 from the same map data provider that provides the HD map data. The SD2→SD1 route matching component 227 of the horizon system 220 receives a navigation route 247 with respect to the SD2 map from the navigation system 240 that operates on the second SD2 map 242. The SD2→SD1 route matching component 227 converts the navigation route 247 with respect to the SD2 map into a navigation route 228 with respect to the SD1 map for input to the correspondence module 226. The correspondence module 226 uses the map linkage system data for providing conversion between the SD1 and HD map and thus requires the route to be expressed with respect to the SD1 map. The correspondence module 226 then converts the route with respect to the SD1 map to a route with respect to the HD map as described by reference to Figures 15 and 16, but with references to SD1 replacing references to SD. The determined HD route may then be input to the horizon manager 224 for use as previously described.

Determining the navigation route 228 with respect to the SD1 map comprises finding the road segments forming the navigable route from the start location (usually the current location) to the destination location.

An example implementation of the SD2→SD1 route matching component 227 plans the navigation route 228 in the context of the road network model of the SD1 map 272 received via the map delivery system and map client (280, 230) using a constraining navigation route corridor (e.g. 400 m wide). The SD2→SD1 route matching component 227 plans the navigation route and beneficially may use the route planning criteria (especially vehicle type and time of day) as applied by the navigation system 240 for planning the SD2 navigation route 247 in the road network model of SD2 map 242.

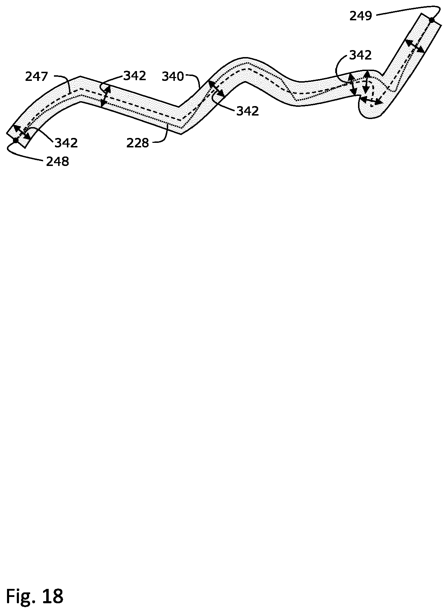

Figure 18 contains an example of the navigation route and the navigation route corridor.

Figure 18 shows the navigation route 247 in the context of the road network model of the SD2 map 242 received from a second map client 246 from a start location 248 to a destination location 249 and a navigation route corridor 340 that defines an area with a constant width distance 342 around a centreline formed by second navigation route 247. The SD2→SD1 route matching component 227 then generates a navigation route 228 from the start location 248 to the destination location 249 that is within the area of the navigation route corridor 340. This enables the SD2→SD1 route matching component 227 to determine the navigation route 228 even when there is a road segment in the second navigation route 227 for which there is no corresponding road segment in the SD1 map 272. It also allows the SD2→SD1 route matching component 227 to plan a navigation route 228 that remains within the corridor area 340 that is optimal for the Automated Driving System 210. The SD2→SD1 route matching component 227 may beneficially use the routing criteria (e.g. vehicle type and time of day) that the navigation system 240 used in planning the second navigation route 227. In that case, the navigation system 240 provides the routing criteria along with the second navigation route to the SD2→SD1 route matching component 227.

In a variant implementation, the SD2→SD1 route matching component 227 may operate on a map independent encoding for the second navigation route 227 in the context of the road network model of the second SD2 map 242. The map independent encoding step may be done in the navigation system 240, so the second navigation route is in a map independent encoded format. Alternatively, the map independent encoding may be implemented in the SD2→SD1 route matching component 227. The SD2→SD1 route matching component 227 decodes the encoded map independent navigation route into the navigation route in the context of the road network model of the SD1 map 272 provided by the map client 230. The OpenLR specification describes a format for map independent encodings of navigation routes, traffic condition encodings, and points of interest in a map. The decoding of the encoded navigation route typically involves finding segments in the map that form shortest path connections between the points of the encoded navigation route. The decoding may be constrained by attributes assigned to the encoded navigation route such as incoming or outgoing direction, a general shape of a road connection between two locations, or the functional road class of the road connection between two locations.

Figure 18 shows an example in which the second navigation route 247 and the navigation route 228 are different although the navigation route 228 is within the area of the navigation route corridor 340. The SD1→HD conversion component 226 of the horizon system 220 converts the navigation route 228 into the corresponding AD route 229. Hence the AD route and SD route will cover the same path in the road network. Due to the differences in the navigation route 228 and the second navigation route 247, the Automated Driving System 210 may cause the vehicle to deviate from the second navigation route 247 as planned by the navigation system 240. This resembles the situation where a driver deviates from the navigation route. In such cases the navigation system detects the deviation and starts a deviation planning from an appropriate 'driver' decision point sufficiently ahead of the vehicle. The adjusted navigation route will be applied to the driving automation derivation process as described earlier. The implied driving automation route changes, if any, will be passed on by the horizon provider to the driving automation systems. This process may repeat itself a few times until it stabilizes where the navigation map and delivered SD map are (sufficiently) consistent.

While the invention has been illustrated by reference to the transformation of a route from an SD map to an HD map, the reverse transformation may similarly be achieved using the map linkage system described herein. Furthermore, the map linkage data described herein may be used to determine corresponding location data (in the other one of first and second digital maps) for any type of location data with respect to a starting one of the first and second maps). The location data need not necessarily represent a route, and may be any line location or indeed a point location. The location data and the corresponding location data are both map matched with respect to the applicable maps. Where the location data in the starting one of the first and second maps is indicative of a line location, the location data may be expressed in terms of a starting point and ending point of the line, each being a distance along an arc of the starting map (e.g. an offset from a start node of the respective arc). The corresponding location data may also be expressed in such terms. The corresponding location data may be indicative of one or more corresponding line locations, each having a starting point and ending point in terms of a distance along an arc (depending upon whether a single corresponding line location can be identified, or multiple line locations where corresponding arc sections in the other of the first and second maps do not exist for the full line location in the starting map). Where the location data is indicative of a point location, the point may be expressed as a distance along an arc e.g. an offset from a start node of the arc. Determining a corresponding point location using the map linkage data may involve identifying an arc section included in the data in the starting one of the maps including the point location, and identifying an arc section corresponding thereto. Determining corresponding location data for a line location in the starting one of the first and second digital maps may involve identifying each arc section of the starting map in the map linkage data included in the line location (e.g. those arc sections including the starting and end points of the line location and any arc sections therebetween), and determining arc sections of the other one of the first and second digital maps included in the map linkage data corresponding to the identified arc sections of the starting map). Data indicative of the determined arc section(s) of the other one of the first and second digital maps is then generated to provide the corresponding location data.

### Terminology

The following terminology may be used herein.

| Term | Description |
|---|---|
| Original map | An electronic map of an area representing a road network in the area that is specific to an application (use case) and a map provider. Examples of maps for different applications are HD map and SD map. There are a number of different map providers. The original map contains nodes and arcs. |
| Node | A node is a location associated with a road network. It may represent a location at which aspects of the road changes such as junctions or a change in lane topology. A node also may be used for other purposes depending on the application and the map provider. |

| | |
|---|---|
| Arc | An arc is a directed road element that connects two nodes in the original map. The arc describes the road connection between the locations of two nodes of the original map in the direction of travel. In an SD map the arc may be called a road element or a road segment. In an HD map, the arc may represent a lane group, or a centreline of the lane group. |
| Abstract map | An electronic map of an area representing an abstract version of the original map that contains information of the original map that is useful in determining the map linkage data described herein. The abstract map comprises topology nodes and stretches. |
| Topology node | A node of an abstraction map representing a junction node or a lane node of the original map |
| Lane node | A lane node is a node of the original map that is associated with a change in lane topology. |
| Junction node | A junction node is a node of the original map that is associated with a change in the road network topology (e.g. a T-junction, a crossing). |
| Bivalent node | A bivalent node is a node of the original map that, for an undirected graph form map is associated with one incoming arc and one outgoing arc, or, for a directed graph form map, is connected to one incoming and one outgoing arc when representing a one way road, or to two incoming and two outgoing arcs (i.e. two incoming-outgoing arc pairs) when representing a two way road.. The bivalent node represents a continuation of the road element and may be a lane node, or a node added to the map to address specific application requirements or map provider requirements. |
| Stretch | A stretch represents directed connection between two topology nodes in the abstract map. The direction of the stretch represents the driving direction for the stretch. |
| Arc section | An arc section describes a portion of an arc in the longitudinal direction along the length of the arc. The arc section may be defined by an arc reference (or an arc identifier), an arc section start location and an arc section end location. The arc section start-location and the arc section end-location can be expressed as a distance from the start node of the arc in the direction of the (directed) arc. The distance along the arc may be expressed as a percentage of the length of the arc, or as an actual distance value (e.g. meters, miles). In some cases, the arc section additionally may comprise a lane reference or lane range information i.e. also being a lateral portion of an arc. This enables the correspondence to be captured at the lane level rather than at the road level. |

The foregoing detailed description has been presented for the purposes of illustration and description. It is not intended to be exhaustive or to limit the technology described herein to the precise form disclosed. Many modifications and variations are possible in the light of the above teaching. The described embodiments were chosen in order to best explain the principles of the technology described herein and its practical applications, to thereby enable others skilled in the art to best utilise the technology described herein, in various embodiments and with various modifications as are suited to the particular use contemplated. Thus, the features disclosed in this specification, the figures and/or the claims may be material for the realization of various embodiments, taken in isolation or in various combinations thereof. Furthermore, although the present invention has been described with reference to various embodiments, it will be understood by those skilled in the art that various changes in form and detail may be made without departing from the scope of the invention as set forth in the accompanying claims.

### List of Embodiments A

1. A method of providing a map linkage data product for use in determining a correspondence between first and second digital maps;
   wherein the first and second digital maps each comprise a plurality of arcs connected by nodes representing the road network in a geographic area;
   the method comprising;
      determining an abstraction of each of the first digital map and the second digital map, wherein the abstraction of each digital map comprises a plurality of stretches connected by nodes, wherein the nodes of each abstracted digital map are a subset of the nodes of the original digital map from which it is derived, corresponding to the topological nodes thereof;
      and using the abstraction of each of the first digital map and the second digital map to obtain a map linkage data product, wherein the map linkage data product provides a correspondence between the first and second digital maps.
2. The method of embodiment 1 wherein the step of using the abstractions of each of the first and second digital maps to obtain the linkage data product comprises using the abstractions of the first and second digital maps to identify corresponding arc sections in the first and second digital maps.
3. The method of any preceding embodiment wherein the method comprises using the abstraction of each of the first and second digital maps to determine a correspondence between the original first and second digital maps based at least in part on a similarity in shape between stretches of the abstracted first and second digital maps.
4. The method of embodiment 3 wherein the similarity in shape between stretches of the abstracted first and second digital maps is assessed based on a similarity in shape of a middle portion of the stretches.
5. The method of embodiment 3 or embodiment 4 wherein the method comprises associating respective markers with the mid-points of stretches in each of the abstracted maps, and comparing the shape of the stretches in the abstracted maps starting from the markers.
6. The method of any preceding embodiment wherein the step of using the abstractions of each of the first and second digital maps to obtain the map linkage data product comprises exploring paths in the abstractions of each of the first and second digital maps between reference points along the stretches thereof to obtain connectivity information for each abstracted map, and using the connectivity information in obtaining the map linkage data product.
7. The method of embodiment 6 comprising comparing the connectivity information obtained in relation to each one of the abstracted maps, determining a correspondence between the connectivity of the abstracted maps, and using the determined correspondence between the connectivity in determining the correspondence between the original first and second digital maps.
8. The method of embodiment 6 or embodiment 7 wherein the step of exploring paths in the abstraction of each one of the first and second digital maps between points comprises determining a route between the points.
9. The method of any one of embodiments 6 to 8 as dependent upon embodiment 5 wherein the reference points between which paths are explored correspond to the markers associated with the stretches.
10. The method of any preceding embodiment wherein the map linkage data product comprises data indicative of a plurality of arc sections of the first digital map, and, for each arc section of the first digital map, data indicative of a corresponding arc section of the second digital map.
11. The method of embodiment 10 wherein each arc section is a longitudinal portion of an arc of the respective one of the first and second digital maps, and the data indicative of the arc section comprises data indicative of the longitudinal portion of the arc of the first or second digital map defining the arc section.
12. The method of embodiment 10 or embodiment 11 wherein at least some of the arc sections of at least one of the first and second digital maps are a lateral portion of the arc of the respective one of the first or second digital maps, wherein the data indicative of such arc sections further comprises data indicative of the lateral portion of the arc of the one of the first or second digital maps defining the arc section.
13. The method of embodiment 12 wherein the respective one of the first or second digital maps is a map which comprises lane geometry data, wherein each arc of the digital map is associated with data indicative of a set of lane trajectory lines representing the trajectory of each one of the group of one or more lanes of a road area represented by the arc, and the arc section that is a lateral portion of an arc corresponds to a subset of the set of lane trajectory lines represented by the arc of the digital map.
14. The method of any preceding embodiment wherein the map linkage data product comprises at least one map linkage table.
15. The method of any preceding embodiment wherein one of the first and second digital maps comprise data indicative of a lane geometry of the road network, and the other of the first and second digital map does not include data indicative of a lane geometry of the road network.
16. A map linkage data product obtained in accordance with any preceding embodiment.
17. The method or map linkage data product of any preceding embodiment wherein the map linkage data product is provided in the form of a map linkage data layer associated with a map layer comprising the first digital map data and/or a map layer comprising the second digital map data.
18. The method or map linkage data product of any preceding embodiment wherein the first and second digital maps are tile based digital maps, each tile comprising map data in respect of a given geographic area, and the map linkage data product is also tile-based, each map linkage data product tile comprising map linkage data in respect of a given tile of the first and second digital maps.
19. A computer program product comprising computer readable instructions executable to perform a method according to any of embodiments 1 to 15, 17 or 18.

### List of Embodiments B

1. A method of determining a correspondence between first and second digital maps,
   wherein the first digital map comprises a plurality of arcs connected by nodes representing the road network in a geographic area;
   and the second digital map comprises a plurality of arcs connected by nodes representing the road network in the geographic area;
   the method comprising:
      obtaining location data with respect to a starting one of the first and second digital maps for which a correspondence is required with respect to the other one of the first and second digital maps; and using map linkage data to determine corresponding location data with respect to the other one of the first and second digital maps;
      wherein the map linkage data comprises data indicative of a plurality of arc sections of the first digital map, and, for each arc section of the first digital map, data indicative of a corresponding arc section of the second digital map, wherein the map linkage data enables, for a starting arc section in either one of the first and second digital maps, a corresponding arc section in the other one of the first and second digital maps to be obtained;
      the method further comprising generating data for output indicative of the determined corresponding location data with respect to the other one of the first and second digital maps.
2. The method of embodiment 1 wherein the location data is indicative of a line location.
3. The method of embodiment 2 wherein the line location is at least a portion of an arc of the starting one of the first and second digital maps representing at least a portion of a road element of the road network.
4. The method of embodiment 2 or embodiment 3 wherein the line location represents a route through the road network.
5. The method of any preceding embodiment wherein the step of determining corresponding location data with respect to the other one of the first and second digital maps comprises;
   determining one or more arc sections of the starting one of the first or second digital map included in the map linkage data corresponding to the location data , and identifying one or more corresponding arc sections in the other one of the first and second digital maps included in the map linkage data corresponding to the determined one or more arc sections according to the map linkage data,
   and wherein generating data for output indicative of the corresponding location data with respect to the other one of the first and second digital maps comprises generating data for output indicative of the identified one or more corresponding arc sections of the other one of the first and second digital maps.
6. The method of any preceding embodiment wherein the location data is associated with data identifying the one of the first or second digital maps to which it relates.
7. The method of any preceding embodiment wherein one of the first and second digital maps is not indicative of a lane geometry of the road network and the other one of the first and second digital maps is indicative of a lane geometry of the road network, for example wherein the first digital map is not indicative of a lane geometry of the road network and the second digital map is indicative of a lane geometry of the road network.
8. The method of any preceding embodiment wherein the location data with respect to the starting one of the first and second digital maps (e.g. the first digital map) is obtained based on data received from one of first and second digital map based applications (e.g. the first digital map based application), and a correspondence is required with respect to the other one of the first and second digital maps (e.g. the second digital map) for use by the other one of the first and second digital map based applications (e.g. the second digital map based application), and the method comprises outputting the data indicative of the determined corresponding location data to the other one of the first and second digital map based applications (e.g. the second digital map based application) for use thereby.
9. The method of embodiment 8 wherein the first digital map based application uses the first digital map and the second digital map based application uses the second digital map.
10. The method of embodiment 8 wherein the first digital map based application uses a digital map which is different to the first digital map but of the same type as the first digital map, and the second digital map based application uses the second digital map
11. The method of embodiment 8, 9 or 10 wherein the location data is indicative of a line location with respect to the first digital map representing a route determined by the first digital map based application.
12. The method of embodiment 11 as dependent directly or indirectly upon embodiment 10 wherein the route is a route corresponding to a route determined by the first digital map based application with respect to the digital map used by the first digital map based application.
13. The method of embodiment 12 wherein the step of obtaining the location data comprises obtaining data indicative of the route determined by the first digital map based application with respect to its digital map, and determining data indicative of a corresponding route with respect to the first digital map to provide the location data.
14. The method of embodiment 11 as dependent directly or indirectly upon embodiment 9 wherein the route is a route determined by the first digital map based application with respect to the first digital map.
15. The method of any one of embodiments 11 to 14 wherein the first digital map based application is a navigation application and wherein the second digital map based application uses the corresponding location data to determine a representation of the route with respect to the second digital map for use in providing motion planning for a vehicle.
16. The method of any one of embodiments 11 to 14 wherein the second digital map based application uses the corresponding location data in obtaining horizon data indicative of a horizon for the vehicle.
17. The method of any preceding embodiment comprising using a correspondence module to determine the correspondence between the first and second digital maps, wherein the method comprises inputting the obtained location data into the correspondence module, and the correspondence module performing the steps of using the map linkage data to determine the corresponding location data and generating the data for output indicative of the determined corresponding location data.
18. A correspondence module for determining a correspondence between first and second digital maps;
   wherein the first digital map comprises a plurality of arcs connected by nodes representing the road network in a geographic area;
   and the second digital map comprises a plurality of arcs connected by nodes representing the road network in the geographic area;
   wherein the correspondence module is configured to:
      receive input location data with respect to a starting one of the first and second digital maps for which a correspondence is required with respect to the other one of the first and second digital maps;
      and use map linkage data to determine corresponding location data with respect to the other one of the first and second digital maps;
      wherein the map linkage data comprises data indicative of a plurality of arc sections of the first digital map, and, for each arc section of the first digital map, data indicative of a corresponding arc section of the second digital map, wherein the map linkage data enables, for a starting arc section in either one of the first and second digital maps, a corresponding arc section in the other one of the first and second digital maps to be obtained;
      and generate data for output indicative of the determined corresponding location data with respect to the other one of the first and second digital maps.
19. The correspondence module of embodiment 18 wherein the correspondence module is configured to;
   determine one or more arc sections of the starting one of the first or second digital map included in the map linkage data corresponding to the location data, and identify one or more corresponding arc sections in the other one of the first and second digital maps corresponding to the determined one or more arc sections according to the map linkage data,
   and generate data for output indicative of the identified one or more corresponding arc sections of the other one of the first and second digital maps.
20. The method or correspondence module of any preceding embodiment wherein the map linkage data comprises data indicative of a plurality of arc sections of the first digital map, and, for each arc section of the first digital map, data indicative of a corresponding arc section of the second digital map.
21. The method or correspondence module of embodiment 20 wherein each arc section is a longitudinal portion of an arc of the respective one of the first and second digital maps, and the data indicative of the arc section comprises data indicative of the longitudinal portion of the arc of the first or second digital map defining the arc section.
22. The method or correspondence module of embodiment 20 or embodiment 21 wherein at least some of the arc sections of at least one of the first and second digital maps are a lateral portion of the arc of the respective one of the first or second digital maps, wherein the data indicative of such arc sections further comprises data indicative of the lateral portion of the arc of the one of the first or second digital maps defining the arc section.
23. The method or correspondence module of embodiment 22 wherein the respective one of the first or second digital maps is a map which comprises lane geometry data, wherein each arc of the digital map is associated with data indicative of a set of lane trajectory lines representing the trajectory of each one of the group of one or more lanes of a road area represented by the arc, and the arc section that is a lateral portion of an arc corresponds to a subset of the set of lane trajectory lines represented by the arc of the digital map.
24. The method or correspondence module of any preceding embodiment wherein the map linkage data comprises at least one map linkage table.
25. The method or correspondence module of any preceding embodiment wherein the map linkage data is provided in the form of a map linkage data layer associated with a map layer comprising the first digital map data and/or a map layer comprising the second digital map data.
26. The method or correspondence module of any preceding embodiment wherein the first and second digital maps are tile based digital maps, each tile comprising map data in respect of a given geographic area, and the map linkage data is also tile-based, each map linkage data tile comprising map linkage data in respect of a given tile of the first and second digital maps.
27. A computer program product comprising computer readable instructions executable to perform a method according to any of embodiments 1 to 17 or 20-26.

## Claims

1. A method of providing a map linkage data product for use in determining a correspondence between first and second digital maps;
wherein the first and second digital maps each comprise a plurality of arcs connected by nodes representing the road network in a geographic area;
the method comprising;
determining an abstraction of each of the first digital map and the second digital map, wherein the abstraction of each digital map comprises a plurality of stretches connected by nodes, wherein the nodes of each abstracted digital map are a subset of the nodes of the original digital map from which it is derived, corresponding to the topological nodes thereof;
and using the abstraction of each of the first digital map and the second digital map to obtain a map linkage data product, wherein the map linkage data product provides a correspondence between the first and second digital maps.

2. The method of claim 1 wherein the step of using the abstractions of each of the first and second digital maps to obtain the linkage data product comprises using the abstractions of the first and second digital maps to identify corresponding arc sections in the first and second digital maps.

3. The method of any preceding claim wherein the method comprises using the abstraction of each of the first and second digital maps to determine a correspondence between the original first and second digital maps based at least in part on a similarity in shape between stretches of the abstracted first and second digital maps; optionally wherein the similarity in shape between stretches of the abstracted first and second digital maps is assessed based on a similarity in shape of a middle portion of the stretches.

4. The method of claim 3 wherein the method comprises associating respective markers with the mid-points of stretches in each of the abstracted maps, and comparing the shape of the stretches in the abstracted maps starting from the markers.

5. The method of any preceding claim wherein the step of using the abstractions of each of the first and second digital maps to obtain the map linkage data product comprises exploring paths in the abstractions of each of the first and second digital maps between reference points along the stretches thereof to obtain connectivity information for each abstracted map, and using the connectivity information in obtaining the map linkage data product.

6. The method of claim 5 comprising comparing the connectivity information obtained in relation to each one of the abstracted maps, determining a correspondence between the connectivity of the abstracted maps, and using the determined correspondence between the connectivity in determining the correspondence between the original first and second digital maps.

7. The method of claim 5 or claim 6 wherein the step of exploring paths in the abstraction of each one of the first and second digital maps between points comprises determining a route between the points.

8. The method of any one of claims 5 to 7 as dependent upon claim 4 wherein the reference points between which paths are explored correspond to the markers associated with the stretches.

9. The method of any preceding claim wherein the map linkage data product comprises data indicative of a plurality of arc sections of the first digital map, and, for each arc section of the first digital map, data indicative of a corresponding arc section of the second digital map.

10. The method of claim 9 wherein each arc section is a longitudinal portion of an arc of the respective one of the first and second digital maps, and the data indicative of the arc section comprises data indicative of the longitudinal portion of the arc of the first or second digital map defining the arc section.

11. The method of claim 9 or claim 10 wherein at least some of the arc sections of at least one of the first and second digital maps are a lateral portion of the arc of the respective one of the first or second digital maps, wherein the data indicative of such arc sections further comprises data indicative of the lateral portion of the arc of the one of the first or second digital maps defining the arc section; optionally wherein the respective one of the first or second digital maps is a map which comprises lane geometry data, wherein each arc of the digital map is associated with data indicative of a set of lane trajectory lines representing the trajectory of each one of the group of one or more lanes of a road area represented by the arc, and the arc section that is a lateral portion of an arc corresponds to a subset of the set of lane trajectory lines represented by the arc of the digital map.

12. The method of any preceding claim wherein the map linkage data product comprises at least one map linkage table.

13. The method of any preceding claim wherein one of the first and second digital maps comprise data indicative of a lane geometry of the road network, and the other of the first and second digital map does not include data indicative of a lane geometry of the road network.

14. The method of any preceding claim wherein the map linkage data product is provided in the form of a map linkage data layer associated with a map layer comprising the first digital map data and/or a map layer comprising the second digital map data;
or wherein the first and second digital maps are tile based digital maps, each tile comprising map data in respect of a given geographic area, and the map linkage data product is also tile-based, each map linkage data product tile comprising map linkage data in respect of a given tile of the first and second digital maps.

15. A computer program product comprising computer readable instructions executable to perform a method according to any preceding claim.
